# EUROPEAN PATENT APPLICATION

(11) **EP 1 445 896 A1**
(43) Date of publication of application: **11.08.2004**
(21) Application number: 02781758.4
(22) Date of filing: 13.11.2002
(51) Int. Cl.: H04L 12/56

(54) **PROVIDER CONNECTION SYSTEM, PACKET EXCHANGE APPARATUS THEREOF, DNS SERVER, PACKET EXCHANGE METHOD, AND COMPUTER PROGRAM THEREOF**

(30) Priority: 13.11.2001 JP 2001348030; 14.03.2002 JP 2002070292; 09.10.2002 JP 2002296647
(71) Applicant: MATSUSHITA ELECTRIC INDUSTRIAL CO., LTD., Kadoma-shi, Osaka 571-8501 (JP)
(72) Inventor: ISHIHARA, Tomohiro, Yokohama-shi, Kanagawa 224-0054 (JP); SUZUKI, Yoshihiro, Machida-shi, Tokyo 194-0041 (JP); ISHIDA, Hiroshi, Yokohama-shi, Kanagawa 223-0053 (JP)
(74) Representative: Hössle Kudlek & Partner
(86) International application number: PCT/JP2002/011841
(87) International publication number: WO 2003/043276

(57) **Abstract**

The present invention discloses a tunnel-redirection device used as a packet transfer device, in which user can transmit a packet via a plurality of network tunnels simply through the management of a single network tunnel. The tunnel-redirection device 10 switches a packet on a first network tunnel A arranged between a user terminal 1 and a WWW server 3a and a DNS server 3b installed as a center of the provider on Internet 3, arranges a second network tunnel B between the system and a contents server ISP1 of the provider installed in a region "a", extracts a packet from the user terminal on a first network tunnel to a contents server ISP1, converts said packet to a packet of the second network tunnel, transfers said packet to the contents server ISP1, converts said packet from the contents server on the second network tunnel to the user terminal to a packet of the first network tunnel, and transfers said packet to the user terminal.

## Description

### TECHNICAL FIELD

The present invention relates to a provider connection system for connecting a user with a provider by using a network tunnel based on a tunneling protocol. The invention also relates to a packet switching device for the provider connection system and a DNS server, a packet switching method and a computer program therefor.

### BACKGROUND ART

In recent years, services have been widely propagated, which distribute contents of large capacity such as movie, music, etc. to users via Internet.

However, when contents of large capacity such as movie, music, etc. are distributed to a user terminal at remote location from a contents server of an Internet service provider (ISP), it is not possible to download contents of large capacity such as movie, music, etc. on real time if there is an influence from traffic (band) on the route therebetween.

In this respect, it is proposed to arrange contents servers by constructing a contents network for each region. In FTTH or ADSL service, users and ISP are connected by using a virtual leased line called network tunnel. As a protocol for arranging a network tunnel of the above system, PPPoE (point to point protocol over ethernet) (registered trademark) is known, for instance (See the non-patented reference 1). According to this protocol, transmitting/receiving data is transmitted from points other than the predetermined base point as if the data is in encapsulated state (tunnel) so that the transmitting/receiving data is not visible.

### (Non-patented reference 1)

L. Mamakos et al.: "A Method for Transmitting PPP Over Ethernet (R) (PPPoE)"; February 1999, Network Working Group, RFC2516, The Internet Society.

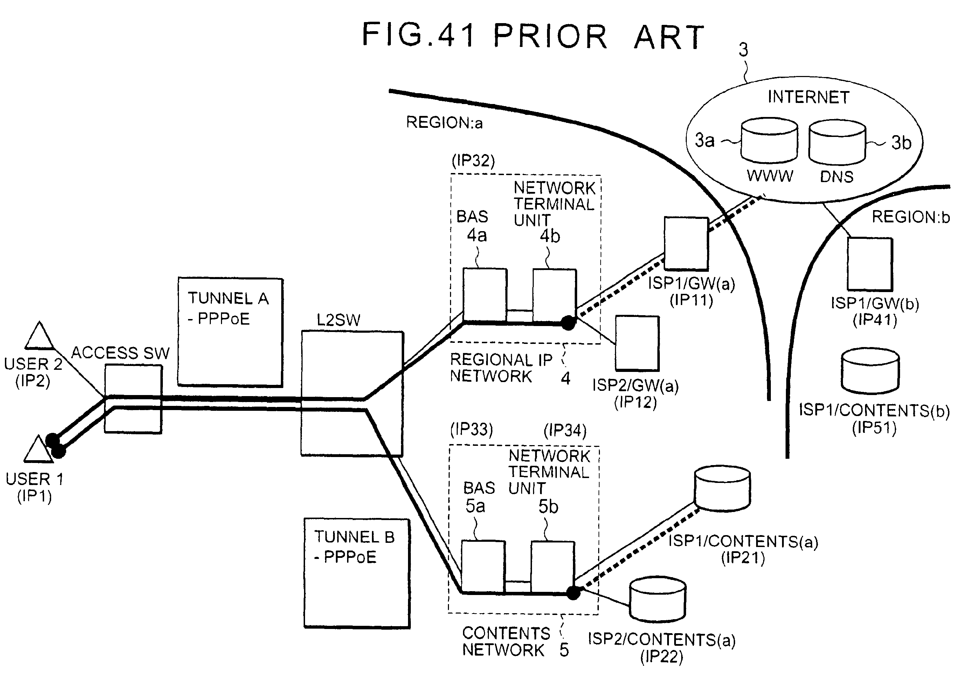

Fig. 41 is a block diagram of an arrangement of the conventional system as described above. On Internet 3, a WWW server 3a and a DNS server 3b are provided as center servers of a provider. In regions a and b, there are provided ISP server/gateways ISP1/GW(a) and ISP1/GW(b) and ISP contents servers ISP1 and ISP2 as local servers of the provider.

The WWW server 3a provides a contents list of ISP contents servers ISP1 and ISP2 via ISP server/gateway ISP1/GW(a), a regional IP network [BAS (broadband access server) 4a, a network terminal unit 4b] 4, a layer 2 switch L2SW, and an access SW. The DNS server 3b identifies a region "a", to which the user belongs, with respect to the user and notifies IP address (i.e. IP21 and IP22) of ISP contents servers ISP1 and ISP2 of the region "a" via the same route. Based on the IP address (=LP21), the user 1 gains access to ISP contents server ISP1 via the access SW, the layer 2 switch L2SW, and a contents network (BAS 5a and a network terminal unit 5b) 5. As a result, the contents are downloaded to the user 1 from the ISP contents server ISP1. In this case, tunnels A and B independent from each other are provided between the user 1 and a regional IP network 4 (on the side of the WWW server 3a and the DNS server 3b) and between the user 1 and the contents network 5 (on ISP contents server ISP1 side) respectively.

However, in the system as described above, the tunnels A and B independent from each other are provided between the user 1 and the regional IP network 4 and between the user 1 and the contents network 5 respectively. As a result, the user must take care of a plurality of tunnels and must have a device for exclusive use at the user terminal.

### DISCLOSURE OF THE INVENTION

To overcome the above problems, it is an object of the present invention to provide a provider connection system and a packet switching device, by which a user can transmit packets through a plurality of network tunnels simply through the management of a single network tunnel, and the invention also provides a DNS server, a packet switching method and a computer program.

To attain the above object, the present invention provides a provider connection system for connecting a user with a provider by a network tunnel based on a tunneling protocol, said system comprising:
a provider network offered by the provider;
a service network operated on a policy different from that of the provider network; and
a packet switching device, said packet switching device switches a packet on a first network between a user terminal and center servers, a second network tunnel is formed between the system and said contents server, a packet from the user terminal to the contents server on the first network tunnel is extracted and converted to a packet on the second network tunnel and is transferred to the contents server, a packet from the contents server on the second network tunnel to the user terminal is converted to a packet of the first network tunnel and is transferred to the user terminal.

Also, the present invention provides a packet switching device of a provider connection system for connecting a user with a provider via a network tunnel based on a tunneling protocol; said packet switching device comprising:
tunnel transfer means for switching a packet on a first network tunnel provided between a user terminal and a provider network offered by the provider;
tunnel branching means for building up a second network tunnel between the system and a service network operated on a policy different from that of the provider network, a packet from the user terminal to the contents server on the first network tunnel is extracted and converted to a packet on the second network tunnel, and the packet is transferred to the contents server; and
tunnel joining means for converting the packet from the contents server on the second network tunnel to the user terminal to a packet of the first network tunnel and for transferring the packet to the user terminal.

Further, the present invention provides a DNS (domain name service) server of a provider connection system, comprising a provider network offered by a provider, a service network operated by a policy different from that of the provider network, and a network tunnel based on a tunneling protocol to connect the user with said provider, wherein said DNS server comprises:
DNS analyzing means for analyzing a domain name inquired by said user and a region, to which said user belongs; and
means for retrieving IP address of said contents server to match the region, to which said user belongs.

Also, the present invention provides a provider connection system for connecting a user with a provider by using a network tunnel based on a tunneling protocol, said provider connection system comprising:
a center server installed on Internet as a center of said provider;
a contents server installed as a local server of said provider for each region; and
a packet switching device, said packet switching device switches a packet on a first network tunnel arranged between a user terminal and said center server, extracts a packet from said user terminal to said contents server on said first network tunnel by arranging an IP network between said contents server and said switching device, performs IP routing to said IP network by converting said packet to a packet of said IP network, converts the packet from said contents server on said IP network to a packet on said first network tunnel, and transfers said packet to said user terminal.

Further, the present invention provides a packet switch device of a provider connection system for connecting a user with a provider by using a network tunnel based on a tunneling protocol, said packet switching device comprises:
tunnel transfer means for switching a packet on a first network tunnel arranged between a user terminal and a center server installed as a center of said provider on Internet;
tunnel branching means for arranging an IP network between the system and a contents server installed as a local server of said provider for each region, for extracting a packet from said user terminal on said first network tunnel to said contents server and for converting said packet to a packet to said IP network, and for performing IP routing to said IP network; and
tunnel joining means for converting a packet from said contents server on said IP network to said user terminal to a packet of said first network tunnel, and for transferring said packet to said user terminal.

Also, the present invention provides a packet switching method of a provider connection system for connecting a user with a provider by using a network tunnel based on a tunneling protocol, said method comprising:
a step of transferring tunnel for switching a packet on a first network tunnel arranged between a user terminal and a provider network offered by the provider;
a step of tunnel branching for arranging a second network tunnel between the system and a service network operated by a policy different from that of the provider network, extracting a packet from said user terminal on said first network tunnel to said contents server, converting said packet to a packet of said second network tunnel, and transferring said packet to said contents server; and
a step of tunnel joining for converting the packet from said contents server on said second network tunnel to said user terminal to a packet of said first network tunnel, and transferring the packet to said user terminal.

Further, the present invention provides a computer program using a computer for executing a packet switching method of a provider connection system for connecting a user with a provider by using a network tunnel based on a tunneling protocol, said method comprising:
a step of transferring tunnel for switching a packet on a first network tunnel arranged between a user terminal and a provider network offered by the provider;
a step of tunnel branching for arranging a second network tunnel between the system and a service network operated by a policy different from that of the provider network, extracting a packet from said user terminal on said first network tunnel to said contents server, converting said packet to a packet of said second network tunnel, and transferring said packet to said contents server; and
a step of tunnel joining for converting the packet from said contents server on said second network tunnel to said user terminal to a packet of said first network tunnel, and transferring the packet to said user terminal.

By the arrangement as described above, the packet switching device converts packets with different protocols. As a result, the user can transmit packets via a plurality of network tunnels merely through the management of a single network tunnel.

### BRIEF DESCRIPTION OF THE DRAWINGS

Fig. 1 is a block diagram of a first embodiment of a provider connection system according to the present invention and a packet switching device thereof;
Fig. 2 is a diagram to explain communication sequence of a system of Fig. 1;
Fig. 3 is a block diagram to show a tunnel-redirection device of Fig. 1 in detail;
Fig. 4 is a block diagram showing a port control unit of Fig. 3 in detail;
Fig. 5 is a block diagram to show a transfer control unit of Fig. 3 in detail;
Fig. 6 is a table to explain a transfer management table of Fig. 3 in detail;
Fig. 7 is a table to explain a redirect management table of Fig. 3 in detail;
Fig. 8 is a drawing to explain a packet transfer processing of a tunnel-redirection device of Fig. 1;
Fig. 9 is a diagram to show an input/output packet of the tunnel-redirection device in Fig. 8 in detail;
Fig. 10 is a flow chart to explain packet transfer processing in case the tunnel-redirection device of Fig. 1 receives a packet from user side;
Fig. 11 is a flow chart to explain packet transfer processing in case the tunnel-redirection device receives a packet from BAS side;
Fig. 12 is a flow chart to explain packet transfer processing in case the tunnel-redirection device of Fig. 8 receives a packet from branch pass side;
Fig. 13 is a block diagram to show a DNS server of Fig. 8 in detail;
Fig. 14 is a table to show a regional selection DNS management table of Fig. 13 in detail;
Fig. 15 is a flow chart to explain a processing of the DNS server of Fig. 1;
Fig. 16 is a block diagram to show a second embodiment of the present invention;
Fig. 17 is a block diagram of a tunnel-redirection device of the second embodiment of the present invention;
Fig. 18 is a table to show a transfer management table in the second embodiment of the invention in detail;
Fig. 19 is a table to explain a redirect management table in the second embodiment of the invention in detail;
Fig. 20 shows a routing table in the second embodiment of the invention in detail;
Fig. 21 is a schematical drawing to show packet transfer processing of the tunnel-redirection device in the second embodiment of the invention;
Fig. 22 is a schematical drawing to show the details of packet structure in case PPPoE is used as a protocol to provide a tunnel A and IP is used as a protocol to transfer a packet to a contents server in the second embodiment of the present invention;
Fig. 23 is a flow chart to show a processing when a packet is received from user side in the second embodiment of the present invention;
Fig. 24 is a flow chart to show a processing when a packet is received from branch pass side in the second embodiment of the present invention;
Fig. 25 is a block diagram to show a third embodiment of the present invention;
Fig. 26 is a table to show a transfer management table in the third embodiment of the invention in detail;
Fig. 27 is a table to show a redirect management table in the third embodiment of the present invention in detail;
Fig. 28 is a drawing to explain packet transfer processing of the tunnel-redirection device in the third embodiment of the present invention;
Fig. 29 is a schematical drawing to show an input/output packet of the tunnel-redirection device in Fig. 28 in detail;
Fig. 30 is a block diagram to show a transfer control unit of the tunnel-redirection device in a fourth embodiment of the present invention;
Fig. 31 is a table to show a transfer management table in the fourth embodiment of the present invention in detail;
Fig. 32 is a flow chart to show a processing when a packet is received from user side in the fourth embodiment of the present invention;
Fig. 33 is a flow chart to show a processing when a packet is received from branch pass side in the fourth embodiment of the present invention;
Fig. 34 is a flow chart to show a processing of a session management unit in the fourth embodiment of the present invention;
Fig. 35 is a schematical block diagram showing a fifth embodiment of the provider connection system and the packet switching device thereof according to the present invention;
Fig. 36 is a schematical block diagram to show configuration of BAS with tunnel-redirection function in Fig. 35;
Fig. 37 is a table to show a transfer management table in the fifth embodiment of the present invention;
Fig. 38 is a schematical block diagram to show a packet transfer processing of BAS with tunnel-redirection function in the fifth embodiment of the present invention;
Fig. 39 is a flow chart to show a processing when a packet is received from user side in the fifth embodiment of the present invention;
Fig. 40 is a flow chart to show a processing when a packet is received from BAS side in the fifth embodiment of the present invention; and
Fig. 41 is a schematical block diagram to show a conventional type network tunneling system.

### BEST MODE FOR CARRYING OUT THE INVENTION

Description will be given below on embodiments of the present invention referring to the drawings.

### [1st Embodiment]

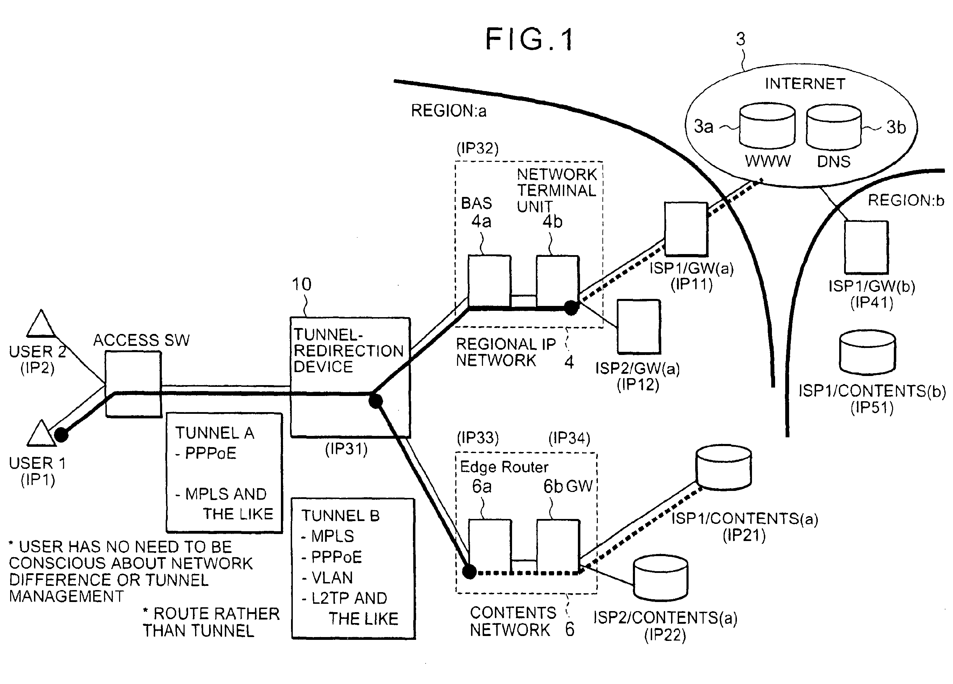

Fig. 1 is a schematical block diagram of a first embodiment of the present invention, comprising a provider connection system and a packet switching device thereof according to the present invention. In the system shown in Fig. 1, a packet switching device according to the present invention is provided instead of a layer 2 switch L2SW as shown in Fig. 41, and it is also different from the conventional example in that a contents network 6 comprises an edge router 6a and a gateway (GW) 6b, and the other system configuration is the same as that of the conventional system. Here, the packet switching device according to the present invention is called a tunnel-redirection device 10. Also, it is assumed that IP number of each block indicates an IP address.

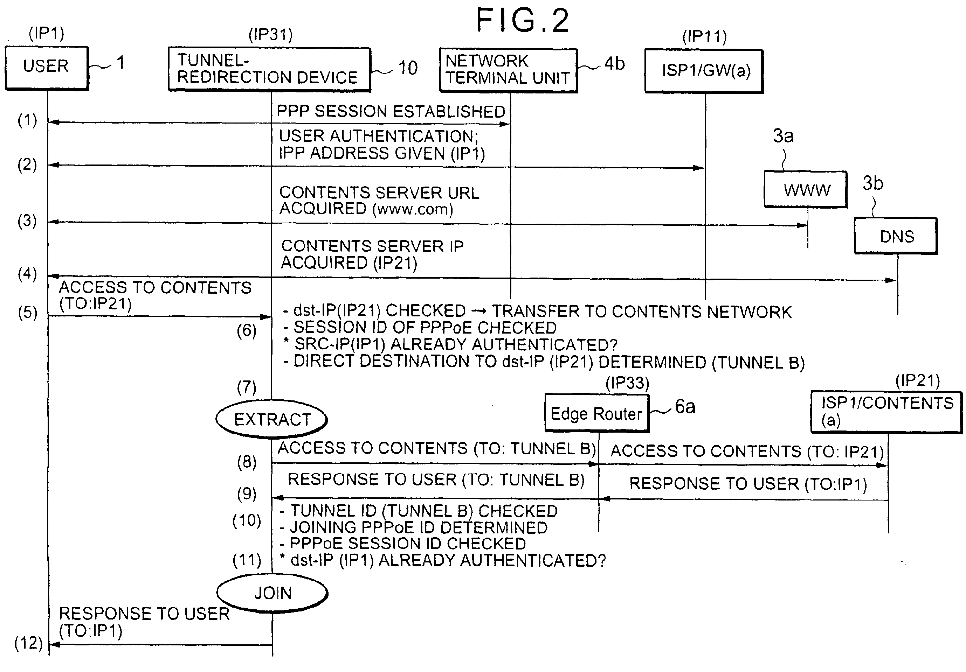

Fig. 2 shows a communication sequence, in which IP address of a contents server ISP1 of a region "a" is given to a user terminal (hereinafter simply referred as "user") 1 of the region "a" via a tunnel A from a WWW server 3a and a DNS server 3b provided on Internet 3 as center servers of the provider in the system shown in Fig. 1. Then, an up-going packet to the contents server IPS1 from the user is branched off, and down-going contents from the contents server ISP1 to the user 1 are joined to the tunnel A.
(1) First, the user 1 and a network terminal unit 4b of the regional IP network 4 establish a PPP session via tunnel-redirection device 10.
(2) Then, user authentication is performed via the tunnel-redirection device 10 and the network terminal unit 4b between the user 1 and ISP server/gateway ISP1/GW(a), and a user IP address (=IP1) is given to the user 1.
(3) Next, the user acquires URL of the contents server ISP1 from the WWW server 3a on Internet 3 via the ISP server/gateway ISP1/GW(a), the network terminal unit 4b and the tunnel-redirection device 10.
(4) Then, the user 1 acquires an IP address (=IP21) of the contents server ISP1 from the DNS server 3b on Internet 3 via the ISP server/gateway ISP1/GW(a), the network terminal unit 4b, and the tunnel-redirection device 10.
   In the above, data transmission between the user 1 and the WWW server 3a or the DNS server 3b on Internet 3 is carried out via the tunnel A.
(5) Next, the user 1 gains access to the contents server ISP1 (IP address=IP21) with respect to the tunnel-redirection device 10.
(6) The tunnel-redirection device 10 with IP address of the contents server set on it checks a destination IP address (dst-IP)=IP21 in order to transfer it to a contents network 6. Then, a session ID of PPPoE is checked, and it is checked that a source IP address (src-IP) is authenticated, and redirect address to the destination IP address=IP21 is determined, and a tunnel B is provided.
(7) Then, the tunnel-redirection device 10 extracts data necessary for the packet of the tunnel B from the packet sent by the user to the contents server ISP1, and this is converted to a packet of the tunnel B.
(8) Next, the tunnel-redirection device 10 gains access to the contents server ISP1 with respect to the edge router 6a of the contents network 6. Then, the edge router 6a gains access to the contents server ISP1.
   As a result, the packet of the tunnel A from the user 1 is converted to a packet of the tunnel B by the tunnel-redirection device 10, and this is transmitted to the contents server ISP1.
(9) Next, the contents server ISP1 transmits a response for the access from the user to the edge router 6a. The edge router 6a transmits the response to the tunnel-redirection device 10.
(10) Upon receipt of the response, the tunnel-redirection device 10 checks the tunnel ID (=tunnel B), and PPPoE session ID (= tunnel A) where the tunnel B joins is determined. Next, the PPPoE session ID is checked, and it is checked whether the destination IP address (=IP1) is acknowledged or not.
(11) Then, the tunnel-redirection device 10 extracts the data required for the packet of the tunnel A from the packet to the user 1 from the contents server ISP1. This is then converted to the packet of the tunnel A and this is joined to the tunnel A.
(12) Then, the tunnel-redirection device 10 transmits the response to the user of IP address (=IP1).

As a result, the contents of the contents server ISP1 are transmitted to the tunnel-redirection device 10 via the tunnel B and are joined to the tunnel A at the tunnel-redirection device 10 and are transmitted to the user 1. The tunnel B of the present invention is handled as a branch pass of the tunnel A rather than as an independent tunnel based on network tunneling.

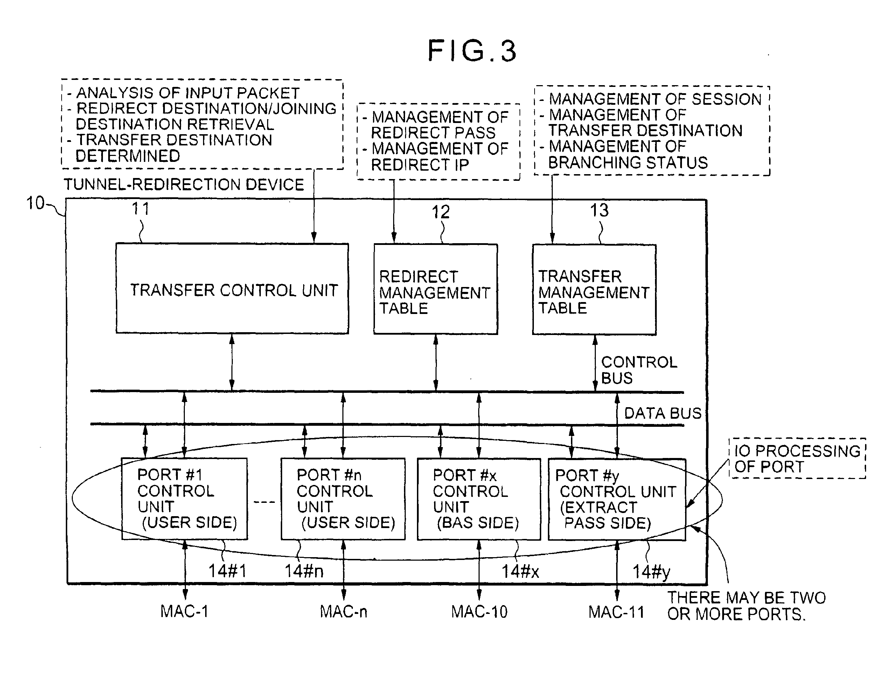

Fig. 3 shows an arrangement of the tunnel-redirection device 10. The tunnel-redirection device 10 comprises a transfer control unit 11, a redirection management table 12 for management of redirect pass and redirect IP address, a transfer management table 13 for management of session, transfer destination, and branching status, port control units 14#1, 14#2, ......, 14#n installed for the users 1, 2, ......, n, a port control unit 14#x provided on the side of the regional IP network 4 closer to BAS 4a, and a port control unit 14#y provided on the contents network 6 (on extraction pass side).

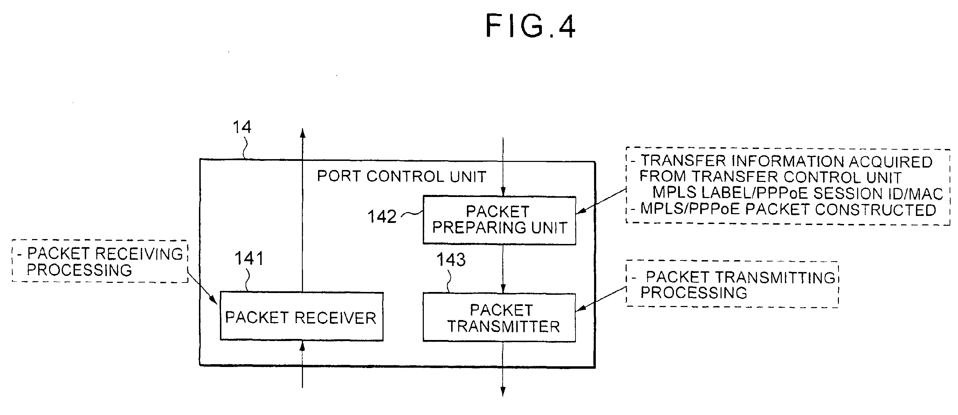

Each of the port control units 14 performs IO processing of the ports #1, #2, ......, #n, #x, and #y. As shown in Fig. 4 in detail, each of the port control units comprises a packet receiver 141, a packet 142, and a packet transmitter 143. The packet preparing unit 142 acquires transfer information from the transfer control unit 11 and constructs packets required for network tunnels such as MPLS label, PPPoE session ID, MAC·MPLS, PPPoE, etc., and these are outputted to the packet transmitter 143.

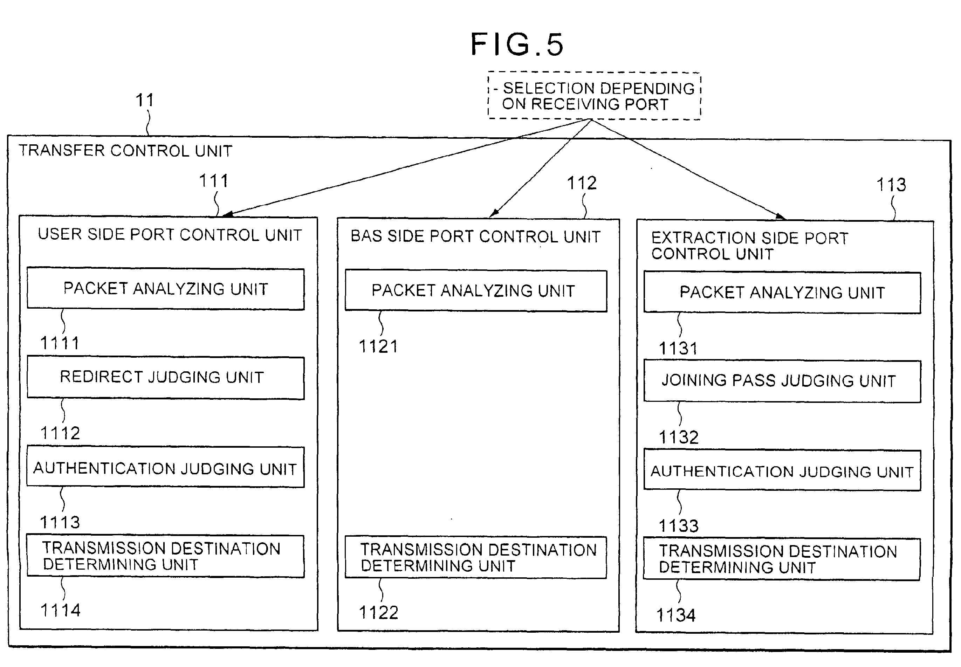

As shown in Fig. 5 in detail, the transfer control unit 11 comprises a user side port control unit 111, a BAS side port control unit 112, and extraction pass side port control unit 113. The user side port control unit 111 comprises a packet analyzer 1111, a redirect judging unit 1112, an authentication judging unit 1113, and transmission destination judging unit 1114. The BAS side port control unit 112 comprises a packet analyzer 1121 and a transmission destination determining unit 1122. The extraction pass side port control unit 113 comprises a packet analyzer 1131, a joining pass judging unit 1132, an authentication judging unit 113, and a transmission destination determining unit 1134.

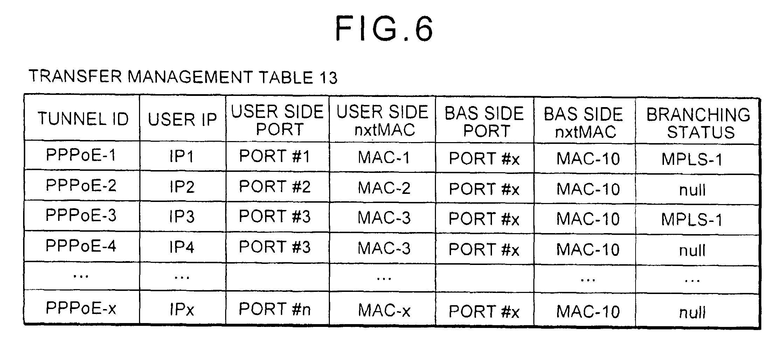

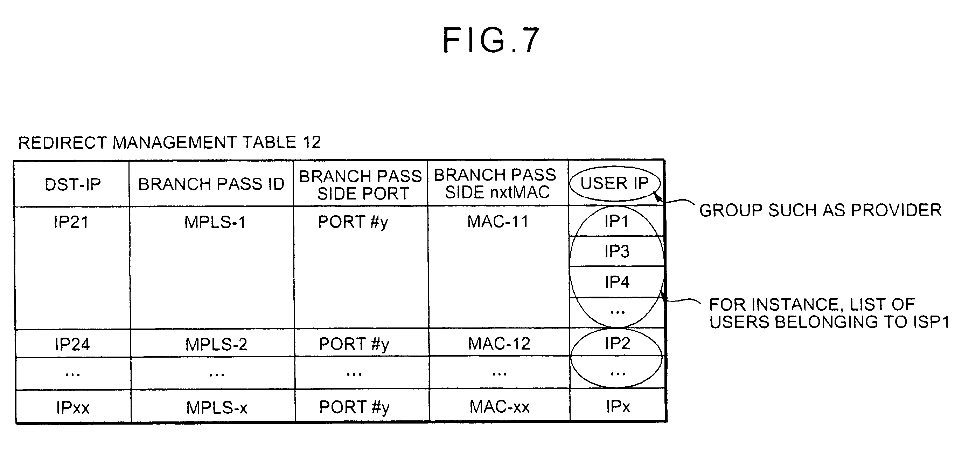

As shown in Fig. 6 in detail, a user IP address, user side port numbers #1, #2, ......, #n, a destination MAC address on user side, a BAS side port number #x, a BAS side destination MAC address, and a branching status (branch pass ID) are stored in the transfer management table 13 for each ID of the tunnel A (=PPPoE-1, PPPoE-2, ......, PPPoE-x). As shown in Fig. 7 in detail, the branch pass ID, the branch pass side port number #y, and the user IP address of the provider are stored in the redirect management table 12 for each destination IP address (contents server). Here, in the tables 13 and 12 shown in Fig. 6 and Fig. 7, PPPoE is used as the protocol to provide the tunnel A, and MPLS is used as the protocol to provide the tunnel B (branch pass).

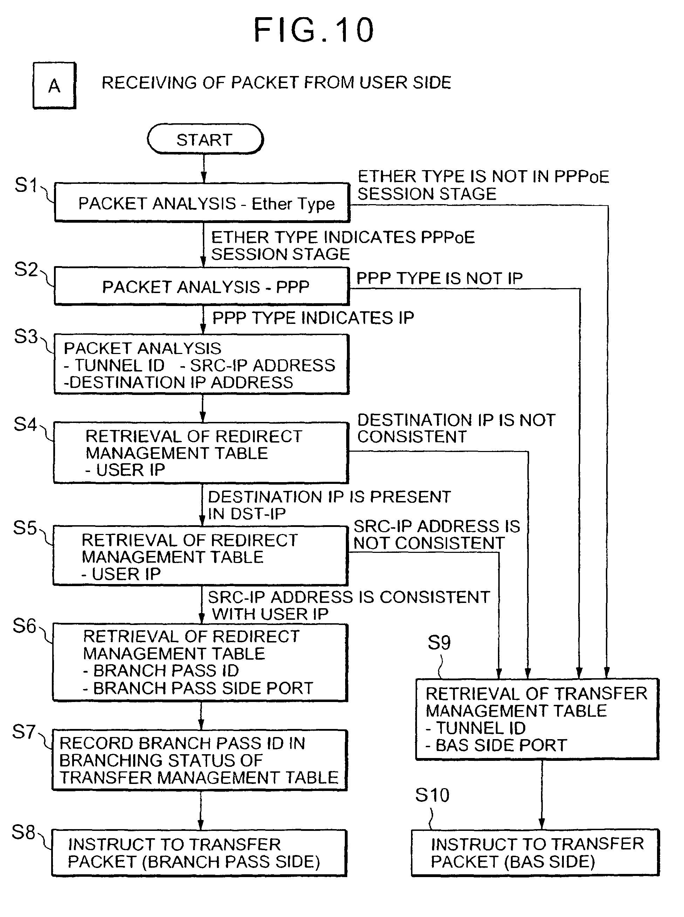

Next, description will be given on packet transfer processing of the tunnel-redirection device 10 by dividing to the following cases referring to Fig. 10, Fig. 11, and Fig. 12:
(A) In case the packet is received from the user;
(B) In case the packet is received from the BAS side;
(C) In case the packet is received from the branch pass side.

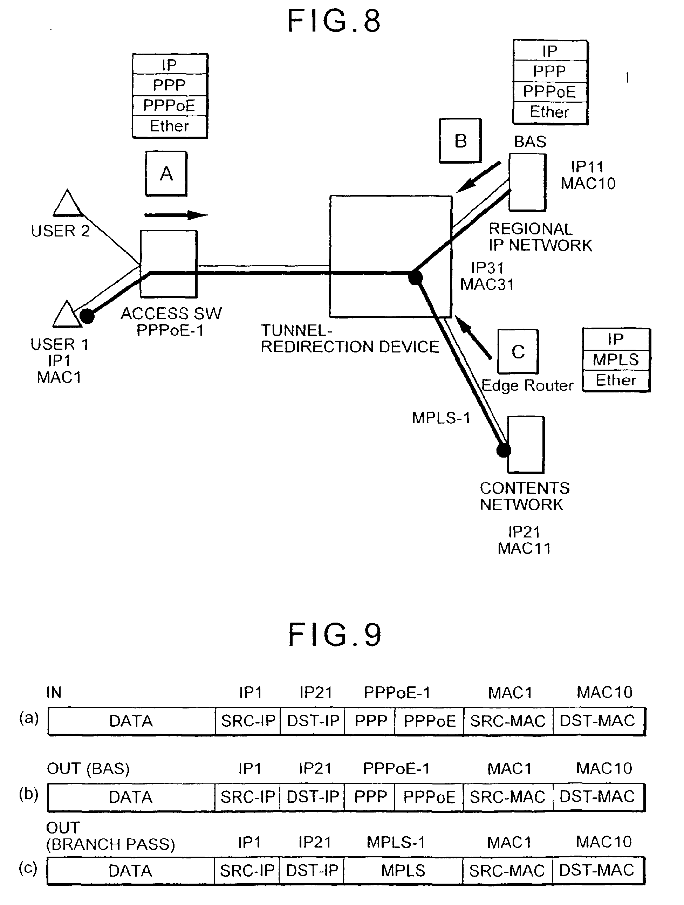

Here, Fig. 9 shows the structure of a packet in detail when PPPoE is used as the protocol to provide the tunnel A, and MPLS is used as the protocol to provide the tunnel B (branch pass). Fig. 9 (a) shows a receiving packet from the user, Fig. 9 (b) shows a transmission packet to the BAS side, and Fig. 9 (c) indicates a transmission packet to the branch pass side. The packet of the tunnel A comprises, in the order from the head (right side in the figure), a destination MAC address, a transmission source MAC address, a PPPoE header, a PPP header, a destination IP address, and a transmission source IP address as well as a field of each data. The transmission packet to the branch pass side comprises, in the order from the head, a destination MAC address, a transmission source MAC address, an MPLS header, a destination IP address, and a transmission source IP address as well as a field for each data.

### (A) In case the packet is received from the user

In Fig. 10, when a packet is received from the user side, it is judged whether the receiving packet is to be transferred to the branch pass side or to the BAS side. First, ether type of the receiving packet is analyzed. In case the ether type is in PPPoE session stage, it is branched off to Step S9 from Step S1. If the ether type indicates PPPoE session stage and PPP type is not IP, it is branched off to Step S9 from Step S2.

If PPP type indicates IP in Step S2, the tunnel ID, the transmission source IP address, and the destination IP address are analyzed (Step S3). Next, the destination IP address is retrieved from the redirect management table 12 as shown in Fig. 7 (Step S4). If the destination IP address is not present in the table 12, it is branched off to Step S9. On the other hand, if it is present, it is advanced to Step S5. In Step S5, it is judged whether or not the transmission source IP address of the receiving packet is consistent with the user IP address, which corresponds to the destination IP address of the redirect management table 12. If it is not consistent, it is branched off to Step S9. If consistent, it is advanced to Step S6.

In Step S6, the branch pass ID and the branch pass side port corresponding to the destination IP address of the redirect management table 12 are retrieved. Next, the branch pass ID is recorded as a branching status corresponding to the tunnel ID in the transfer management table 13 shown in Fig. 6 (Step S7). Next, instruction is given to transfer the receiving packet to the branch pass side (Step S8). On the other hand, in Step S9, the tunnel ID and the BAS side port are retrieved from the transfer management table 13. Next, instruction is given to transfer the receiving packet to the BAS side port (Step S10).

### (B) In case the packet is received from the BAS side

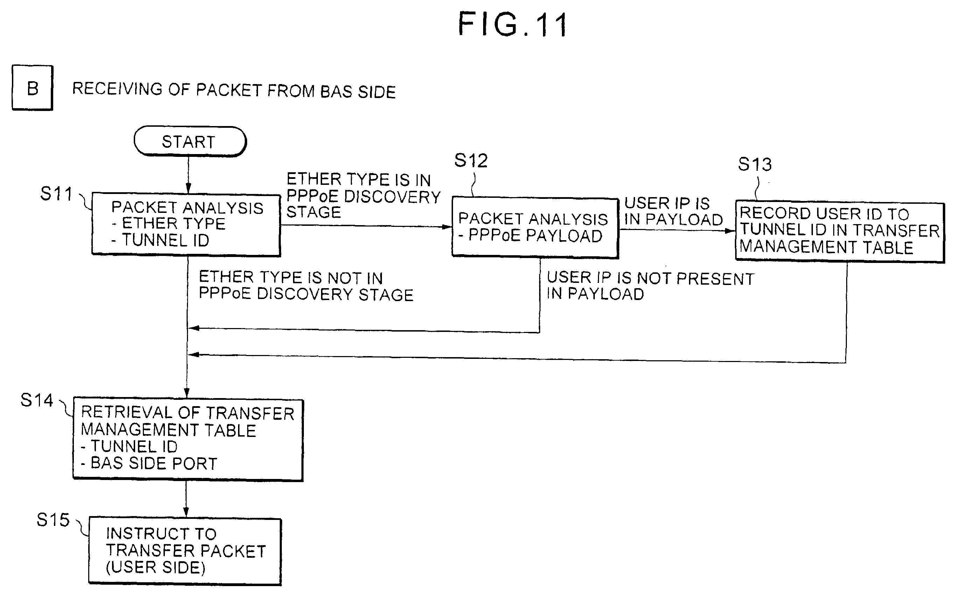

In Fig. 11, when the packet is received from the BAS side, ether type of the receiving packet and the tunnel ID are analyzed (Step S11). If the ether type is in PPPoE discovery stage, it is branched off to Step S12. On the other hand, if it is not in PPPoE discovery stage, it is advanced to Step S14. In Step S12, it is checked whether the user IP address is present in PPPoE payload of the receiving packet. If it is present, it is branched off to Step S13. If not, it is advanced to Step S14. In Step S13, recording is made to match the tunnel ID analyzed in Step S11 in the transfer management table 13. Next, it is advanced to Step S14. In Step S14, the tunnel ID and the BAS side port are retrieved from the transfer management table 13. Next, instruction is given to transfer the receiving packet to the user side port (Step S15).

### (C) In case the packet is received from the branch pass side.

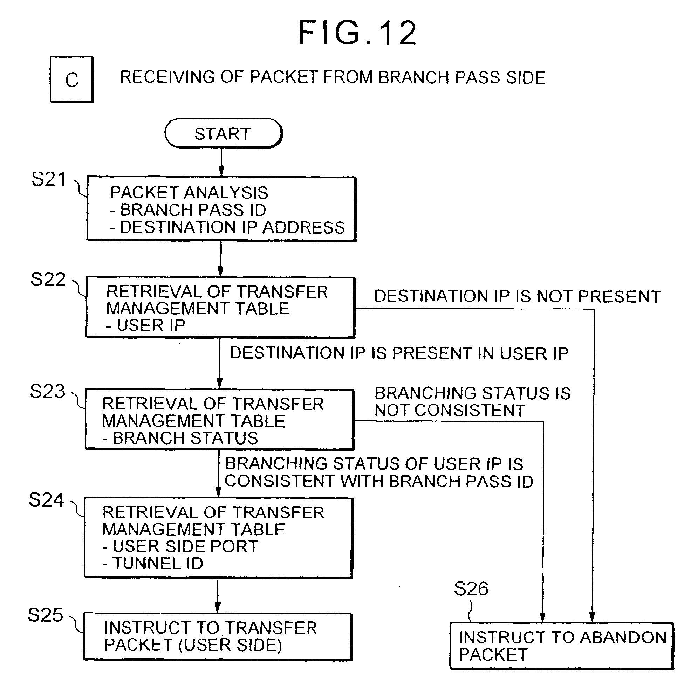

In Fig. 12, when the packet is received from the branch pass side, the branch pass ID and the destination IP address of the receiving packet are analyzed (Step S21). Next, it is checked whether the destination IP address is present in the user IP address of the transfer management table 13 or not (Step S22). If it is not present, instruction is given to abandon the receiving packet (Step S26). On the other hand, if the destination IP address of the receiving packet is present in the user IP address of the transfer management table 13, it is checked whether the branch pass ID analyzed in Step S21 is consistent with the branching status to the user IP address in the transfer management table 13 (Step S23). If it is not consistent, instruction is given to abandon the receiving packet (Step S26). On the other hand, if it is consistent, the user side port and the tunnel ID to the user IP address are retrieved in the transfer management table 13 (Step S24). Next, instruction is given to transfer the receiving packet to the user side port (Step S25).

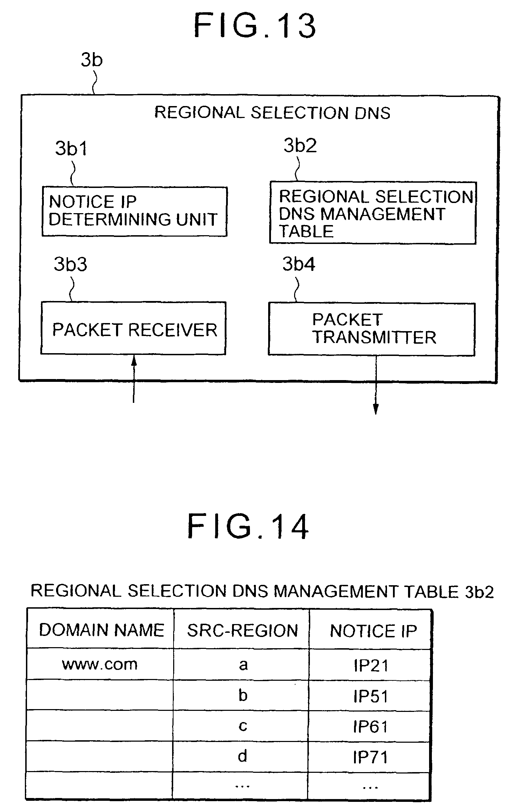

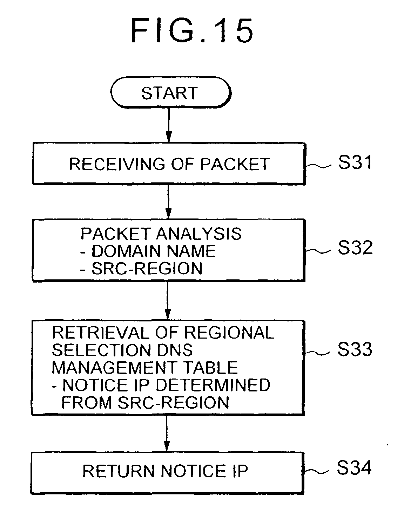

Next, description will be given on the DNS server 3b, which notifies IF address of the contents server to domain name as inquired by the user in Fig. 1. Fig. 13 shows the arrangement of the DNS server 3b in detail. Fig. 14 shows the regional selection DNS management table 3b2 of Fig. 13, and Fig. 15 is a flow chart to explain the processing of the DNS server 3b. The DNS server 3b comprises a notice IP determining unit 3b1, a regional selection DNS management table 3b2, a packet receiver 3b3, and a packet transmitter 3b4. In the regional selection DNS management table 3b2, domain names for each ISP contents server located in the regions a, b, ......, each of the regions a, b, ...... and IP address are recorded as shown in Fig. 1 and Fig. 14. In Fig. 15, when the packet is received (Step S31), the domain name and the region in the receiving packet are analyzed (Step S32). The IP address to match the region is retrieved from the regional selection DNS management table 3b2 (Step S33). Next, its IP address is sent back (Step S34).

As described above, the packet to be sent to the contents server is extracted from the tunnel A and is transferred to the branch pass. As a result, the user can make access to a plurality of networks simply through the management of a single network tunnel.

### [2nd Embodiment]

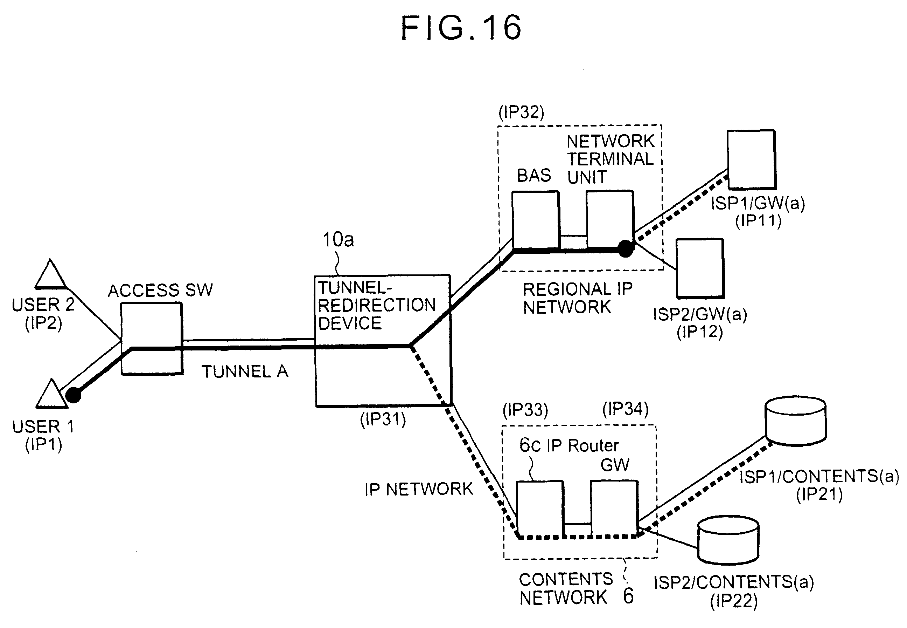

In the second embodiment of the present invention, as a path from the tunnel-redirection device to the contents network 6, a flat IP network is used without forming the tunnel B as shown in Fig. 1. Fig. 16 is a block diagram showing the second embodiment of the present invention. As a packet switching device to make up the contents network 6, an IP router 6c is provided instead of the edge router 6a to match MPLS. The other arrangement is the same as in the first embodiment except the tunnel-redirection device 10a.

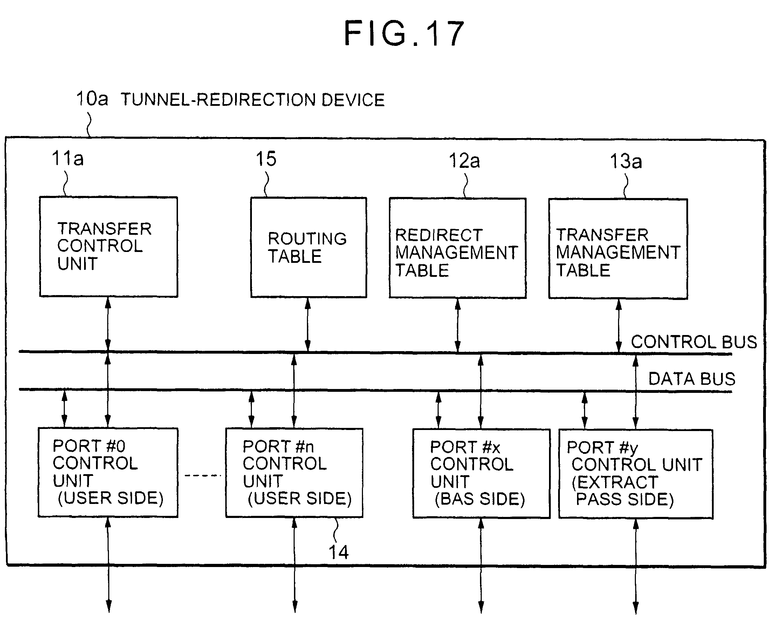

Fig. 17 is a block diagram showing the tunnel-redirection device 10a of the second embodiment. Compared with the arrangement of the first embodiment shown in Fig. 3, the contents of the redirect management table 12a and the transfer management table 13a are different, and the contents of the processing of the transfer control unit 11a are also different. Also, a routing table 15 of the layer 3 is added.

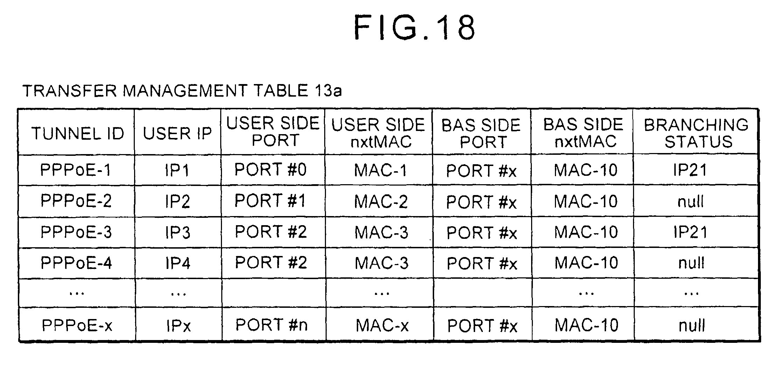

The transfer management table 13a in the second embodiment is shown in Fig. 18. For each ID of the tunnel A (=PPPoE-1, PPPoE-2, ......, PPPoE-x), user IP address, user side port numbers #0, ......, #n, next hop MAC address on the user side (nxtMAC address), BAS side port number 3x, BAS side next hop MAC address (nxtMAC address), and branching status (branch pass ID) are stored. The difference from the first embodiment shown in Fig. 6 is that the IP address of the contents server is stored as the branching status.

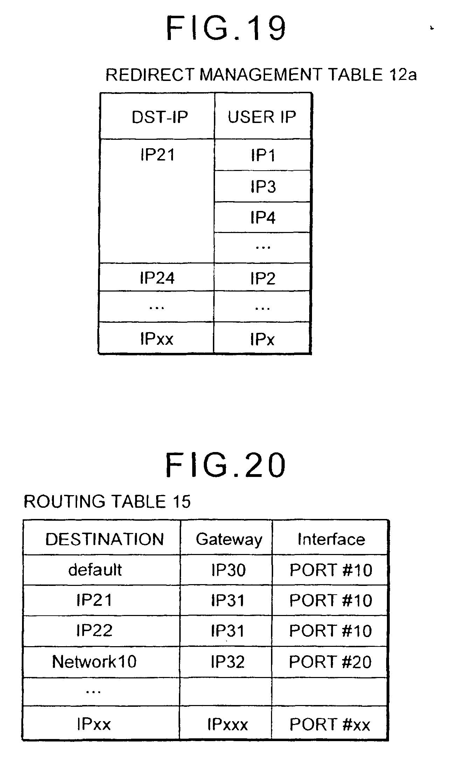

As shown in Fig. 19 in detail, only the user IP address of the provider allowing access to the contents server for each destination IP address (contents server) is stored in the redirect management table 12a. Fig. 20 shows a routing table 15. This is similar to the routing table used on the existing router. The destination address (IP address or network address), the gateway address corresponding to it, and the port number as interface to be inputted are stored.

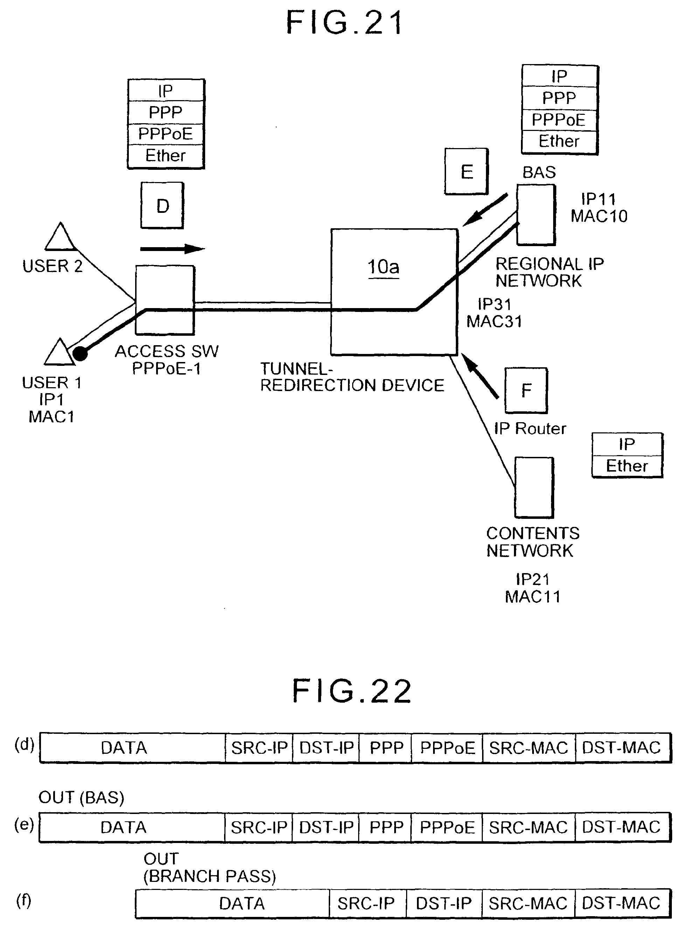

Next, description will be given on packet transfer processing of the tunnel-redirection device 10a in the second embodiment by dividing to the following cases as shown in Fig. 21:
(D) In case the packet is received from the user;
(E) In case the packet is received from the BAS side;
(F) In case the packet is received from the branch pass side.

Because the case where the packet is received from the BAS side (E) is the same as the procedure (B) of the first embodiment, detailed description is not given here.

Here, Fig. 22 shows the structure of the packet in detail when PPPoE is used as the protocol to provide the tunnel A and IP is used as the packet transfer protocol to transfer the packet to the contents server ISP1. Fig. 22 (d) shows the receiving packet from the user 1, Fig. 22 (e) shows the transmission packet to BAS 4a, and Fig. 22 (f) shows a transmission packet to the contents server side (on IP router (6c) side). In the second embodiment, packet structure on the IP router 6c side in Fig. 22 (f) is different, while Fig. 22 (d) and Fig. 22 (e) are the same as Fig. 9 (a) and Fig. 9 (b) of the first embodiment. The arrangement shown in Fig. 22 (f) comprises, in the order from the head (right side in the figure), a destination MAC address, a transmission source MAC address, a destination IP address, and a transmission source IP address as well as a field of each data.

### (D) In case the packet is received from the user side

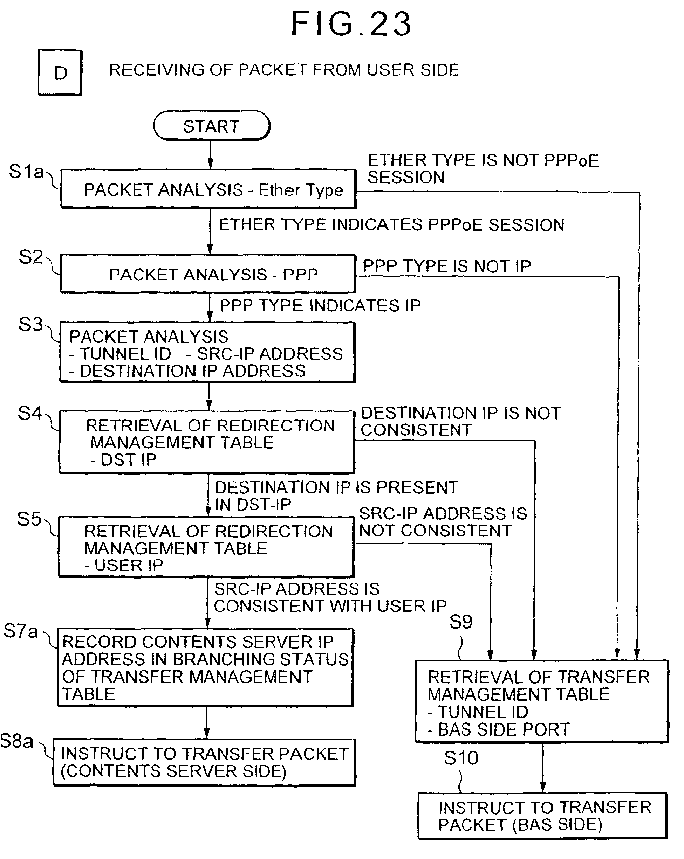

In Fig. 23, when the packet is received from the user, it is judged whether the receiving packet is to be transferred to the contents server side or to the BAS side. First, ether type of the receiving packet is analyzed. In case ether type is in PPPoE session stage, it is branched off from Step S1a to Step S9. Also, in case ether type indicates PPPoE session stage and PPP type is not IP, it is branched off to Step S9 from Step S2.

In case PPP type indicates IP in Step S2, the tunnel ID, the transmission source IP address, and the destination IP address are analyzed (Step S3). Next, the destination IP address from the redirect management table 12a shown in Fig. 19 is retrieved (Step S4). If the destination IP address is not present in the table (not consistent), it is branched off to Step S9. On the other hand, if it is present, it is advanced to Step S5. In Step S5, it is judged whether or not the transmission source IP address of the receiving packet is consistent with the user IP address corresponding to the destination IP address in the table. If it is not consistent, it is branched off to Step S9. If consistent, it is advanced to Step S7a.

In Step S7a, the destination IP address (i.e. IP address of the contents server) is recorded as the branching status corresponding to the tunnel ID in the transfer management table 13a shown in Fig. 18. Next, retrieval is made in the routing table 15 shown in Fig. 20, and instruction is given to transfer the receiving packet to the contents server side (Step S8a). On the other hand, in Step S9, the tunnel ID and the BAS side port are retrieved from the transfer management table 13a. Next, instruction is given to transfer the receiving packet to the BAS side port (Step S10).

### (F) In case the packet is received from the branch pass side

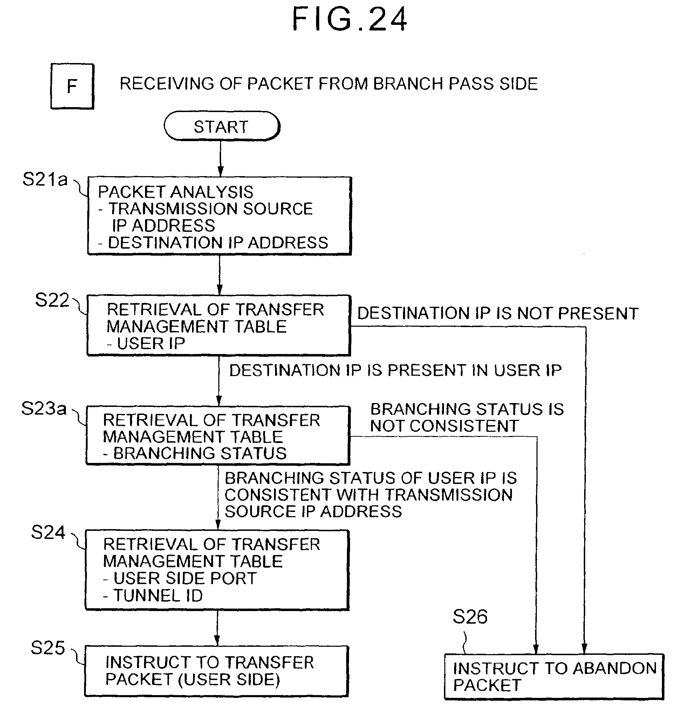

In Fig. 24, when the packet is received from the contents server side, the transmission source IP address and the destination IP address of the receiving packet are analyzed (Step S21a). Next, it is checked whether the destination IP address is present or not in the user IP address in the transfer management table 13a (Step S22). If it is not present, instruction is given to abandon the receiving packet (Step S26). On the other hand, if the destination IP address of the receiving packet is present in the user IP address in the transfer management table 13a, it is checked whether the transmission source IP address analyzed in Step S21a (i.e. IP address of the contents server, to which the use gained access) is consistent or not with the branching status to the user UP address in the transfer management table 13a (Step S23a). If it is not consistent, instruction is given to abandon the receiving packet (Step S26). On the other hand, if it is consistent, the user side port to the user IP address and the tunnel ID are retrieved in the transfer management table 13a (Step S24). Next, instruction is given to transfer the receiving packet to the user side port (Step S25).

As described above, by performing packet transfer via IP routing without providing the tunnel B on the contents server side, it is possible to prepare a packet switching device 10a with simple structure through the use of the existing routing table 15 without providing a mechanism to manage the tunnel B in the packet switching device 10a. Also, by using an inexpensive layer 3 switch 3c instead of the router 3a corresponding to MPLS as a router on the contents server side, it is possible to reduce the cost. As shown in Fig. 22 (f), the packet to be redirected does not require a header (MPLS header) of the tunnel protocol to build up the branch pass as shown in Fig. 9 (c), and it is also possible to reduce or eliminate the overhead when the packet is transferred.

### [3rd Embodiment]

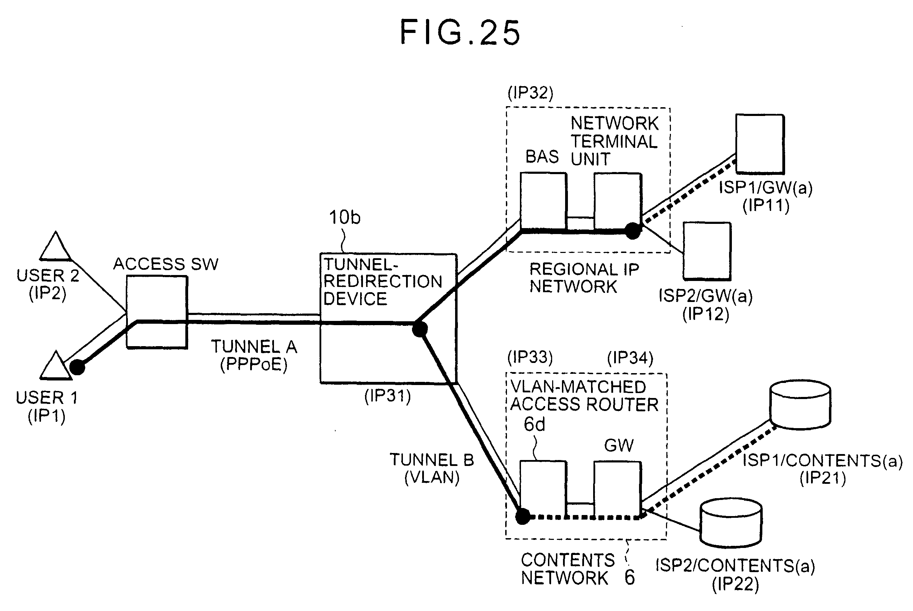

In the third embodiment of the present invention, compared with Fig. 1, the tunnel B between the tunnel-redirection device 10b and the contents network 6 is built up by using VLAN. Fig. 25 is a block diagram showing the third embodiment of the present invention. A VLAN-matched access router 6d is provided instead of the edge router 6a to match MPLS as a packet switching device to make up the contents network 6. The other arrangement is the same as the first embodiment except the tunnel-redirection device 10b.

In the tunnel-redirection device 10b of the third embodiment, the tunnel is provided by using VLAN, and the contents of the transfer management table 13b and the redirect management table 12b are different from those of the first embodiment. Also, a packet receiver 141 of the port control unit 14, the packet preparing unit 142, and the packet transmitter 143 of Fig. 4 correspond to those in VLAN packet processing respectively.

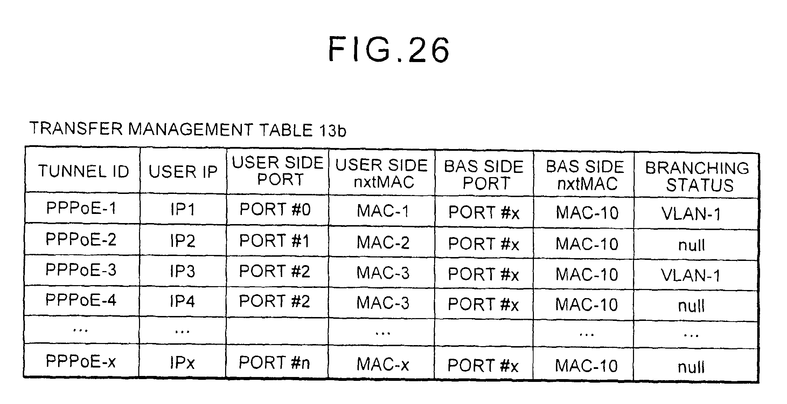

Fig. 26 shows the transfer management table 13b in the third embodiment. The arrangement is the same as in the first embodiment in that the user IP address, the user side port number, the user side destination MAC address, the BAS side port number, the BAS side destination MAC address, and the branching status are stored for each ID of the tunnel A. However, in the third embodiment, it is different from the first embodiment shown in Fig. 6 in that VLAN-ID is stored as the branching status in the third embodiment.

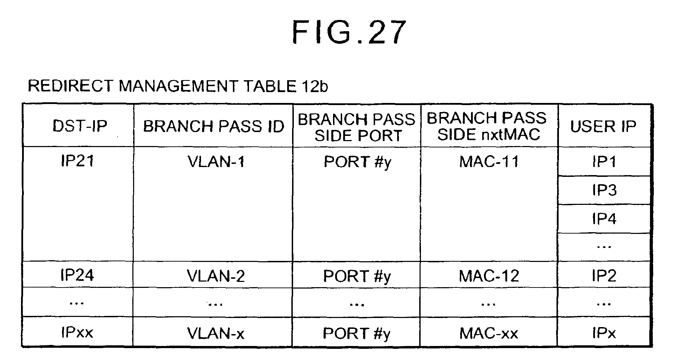

As shown in Fig. 27 in detail, it is the same as in the first embodiment in that the branch pass ID, the branch pass side port number, the branch pass side destination MAC address, and the user IP address of the provider are stored for each destination IP address (contents server) in the redirect management table 12b. However, it is different from the first embodiment of Fig. 6 in that VLAN-ID is stored as the branch pass ID in the third embodiment.

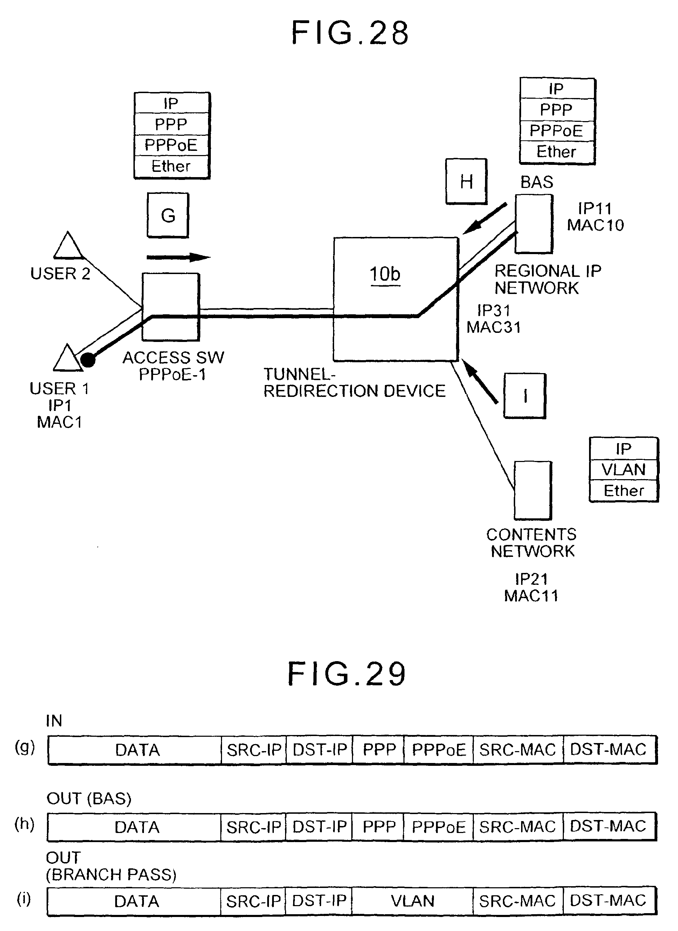

Next, description will be given on packet transfer processing of the tunnel-redirection device 10b in the third embodiment by dividing to the following cases as shown in Fig. 28:
(G) In case the packet is received from the user;
(H) In case the packet is received from the BAS side;
(I) In case the packet is received from the branch pass side.

Fig. 29 shows the structure of the packet in detail when PPPoE is used as the protocol to provide the tunnel A, and VLAN is used as the protocol to provide the tunnel B (branch pass). Fig. 29 (g) shows the receiving packet from the user, Fig. 29 (h) shows the transmission packet to be transmitted to the BAS side, and Fig. 29 (i) shows a packet to be transmitted to the branch pass side. The packet of the tunnel A has the same structure as that of the first embodiment (Fig. 9). The packet to be transmitted to the branch pass side is different from that of the first embodiment, and it comprises, in the order form the head (right side in the figure), a destination MAC address, a transmission source MAC address, a VLAN tag, a destination IP address, and a transmission source IP address as well as a field of each data.

### (G) In case the packet is received from the user

This is the same as in the procedure (a) of the first embodiment except that VLAN-ID is used as the branch pass ID.

### (H) In case the packet is received from the BAS side

This is the same as in the procedure (B) of the first embodiment.

### (I) In case the packet is received from the branch pass side

This is the same as the procedure (C) of the first embodiment except that VLAN-ID is used as the branch pass ID.

As described above, by using VLAN to provide the tunnel B on the contents server side, it is possible to use an inexpensive VLAN-matched access router 6d as a packet switcher on the contents server side. That is, in a system where the user uses a plurality of network tunnels simply through the management of a single network tunnel, it is possible to build up a contents network at low cost.

### [4th Embodiment]

In the first embodiment, the tunnel A is provided by establishing PPP session with center servers of the provider (WWW server 3a and DNS server 3b) and the user. In this case, when the user gains access to the contents server ISP1 by the procedure established in the first embodiment, PPP packet is not transferred to the center servers 3a and 3b of the provider via the tunnel A. Therefore, there is a period, in which the user makes access only to the contents server ISP1, and the packet is not transferred to the center servers 3a and 3b.

On the other hand, the provider may install center servers, which have the functions to cut off PPP session of the tunnel A if the packet is not received within a certain period of time. In this case, if the period, in which the user makes access only to the contents server ISP1, exceeds a preset time, PPP session of the tunnel A is cut off. If the tunnel A is cut off, the data from the contents server ISP1 cannot be joined to the tunnel A and it is abandoned. For instance, when motion picture data is distributed from the contents server ISP1 and if a preset period of time elapses, PPP session is cut off, and the distribution of the motion picture data may be stopped.

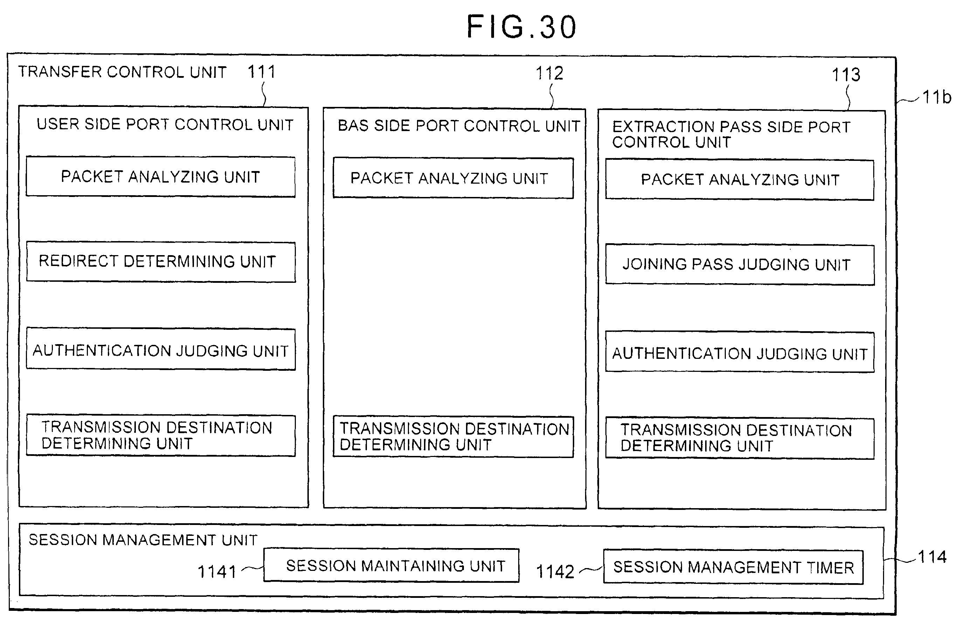

In this respect, the function to maintain the session of the tunnel A is added to the first embodiment. In the fourth embodiment of the invention, the arrangement of the transfer control unit 11 is different from that of the transfer management table 13. The other arrangement is the same as the first embodiment. Fig. 30 shows a transfer control unit 11b in the fourth embodiment. In the transfer control unit 11b shown in Fig. 30, a session management unit 114 is added to the transfer control unit 11 of the first embodiment. The session management unit 114 comprises a session maintaining unit 1141 and a session management timer 1142.

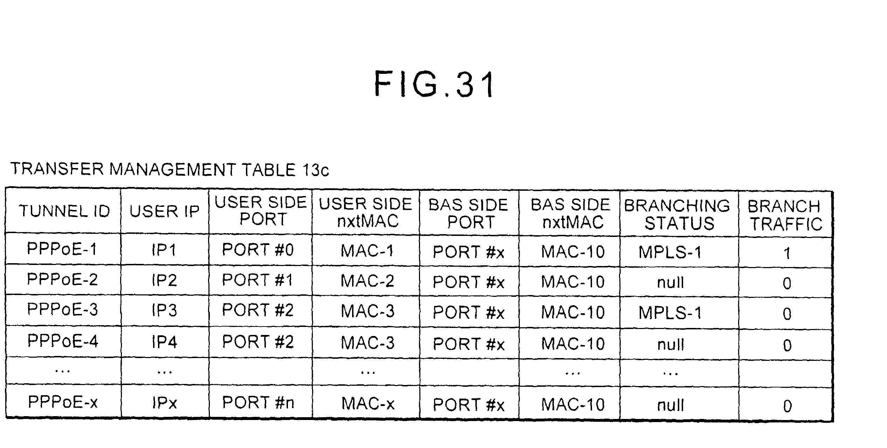

Fig. 31 shows a transfer management table 13c in the fourth embodiment. It is the same as in the first embodiment in that, for each ID of the tunnel A, user IP address, user side port number, user side next hop MAC address (nxtMAC address), BAS side port number, BAS side next hop MAC address (nxtMAC address), and branching status are stored. However, in the fourth embodiment, it is different from the first embodiment in that branch traffic information is additionally stored. In the branch traffic information, when the packet is transferred to the tunnel B within a preset period of time, "1" is stored. When the packet is not transferred, "0" is stored.

Next, description will be given on packet transfer processing of the tunnel-redirection device in the fourth embodiment by dividing to the following cases:
(J) In case the packet is received from the user;
(K) In case the packet is received from the BAS side;
(L) In case the packet is received from the branch pass side.

The case (K) where the packet is received from the BAS side is the same as the procedure (B) in the first embodiment, and detailed description is not given here.

### (J) In case the packet is received from the user

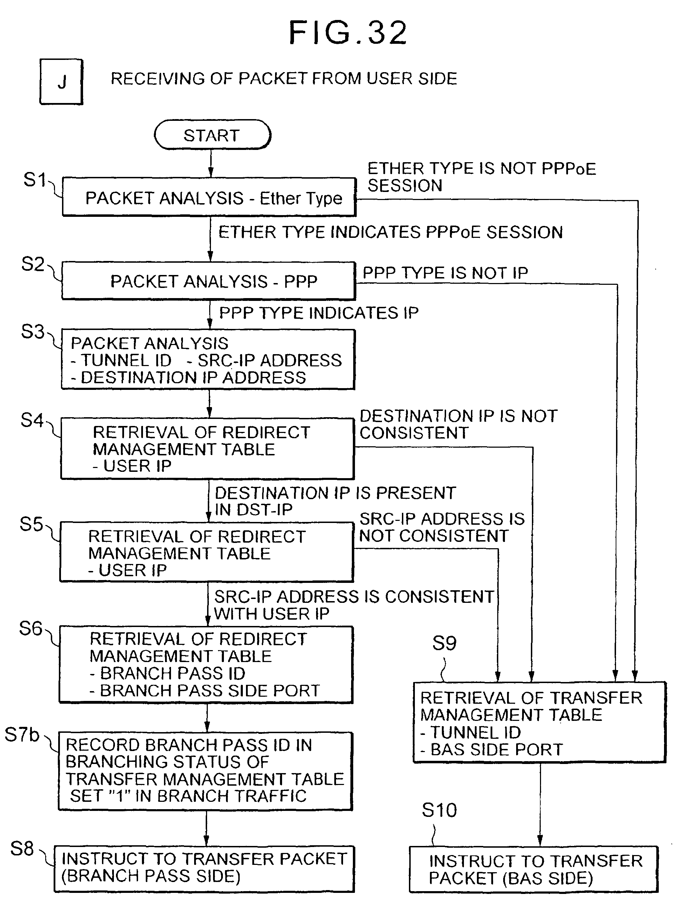

As shown in Fig. 32, immediately before the instruction is given to transfer the receiving packet to the branch pass side in Step S8, the processing to set the branch traffic information of the transfer management table 13c of Fig. 31 to "1" (Step S7b) is added to the procedure (A) of the first embodiment. The other steps are the same as those of the first embodiment.

### (L) In case the packet is received from the branch pass side

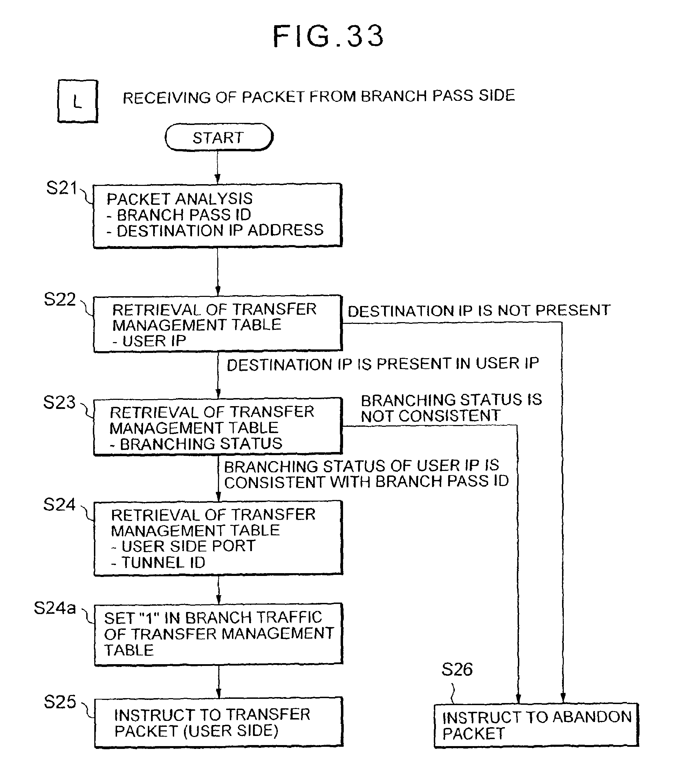

As shown in Fig. 33, immediately before the instruction is given to transfer the receiving packet to the user side in Step S25, the processing to set the branch traffic information of the transfer management table 13c of Fig. 31 (Step S24a) is added to the procedure (C) of the first embodiment. The other steps are the same as those of the first embodiment.

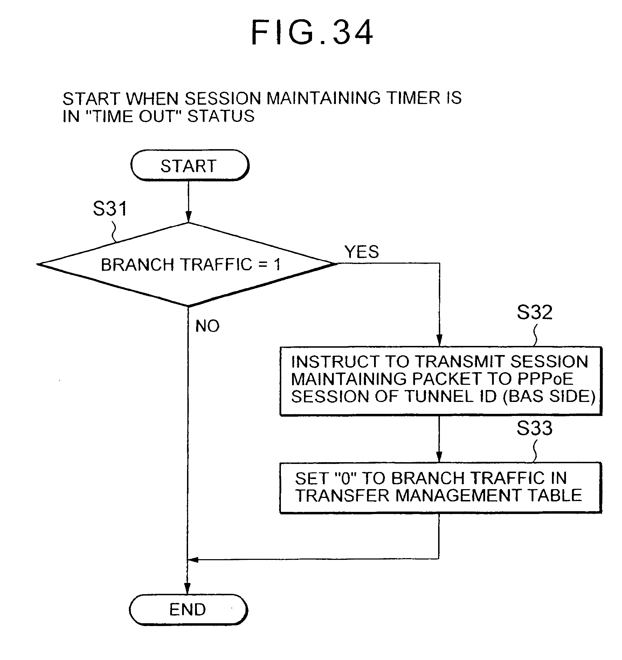

Next, Fig. 34 shows the processing of a session management unit 114 of the fourth embodiment. A session management timer 1142 is operated with a preset cycle. When the preset time in the session management timer 1142 elapses, a session maintaining unit 1141 starts the processing. The session maintaining unit 1141 refers to a value stored in the branch traffic information for each tunnel ID in the transfer management table 13c (Step S31). If the value of the branch traffic information is 1, instruction is given to PPPoE session of the tunnel ID to transfer the transmission processing of the session maintaining packet to the BAS side port (Step S32). Then, the value of the branch traffic information of the transfer management table 13c is set to 0 (Step S33). On the other hand, when the value of the branch traffic information is not 1, no processing is performed. This processing is carried out to all entries in the transfer management table 13c.

As described above, by sending the session maintaining packet during the period when the user is gaining access to the contents server, it is possible to prevent the cutoff of PPP session.

### [5th Embodiment]

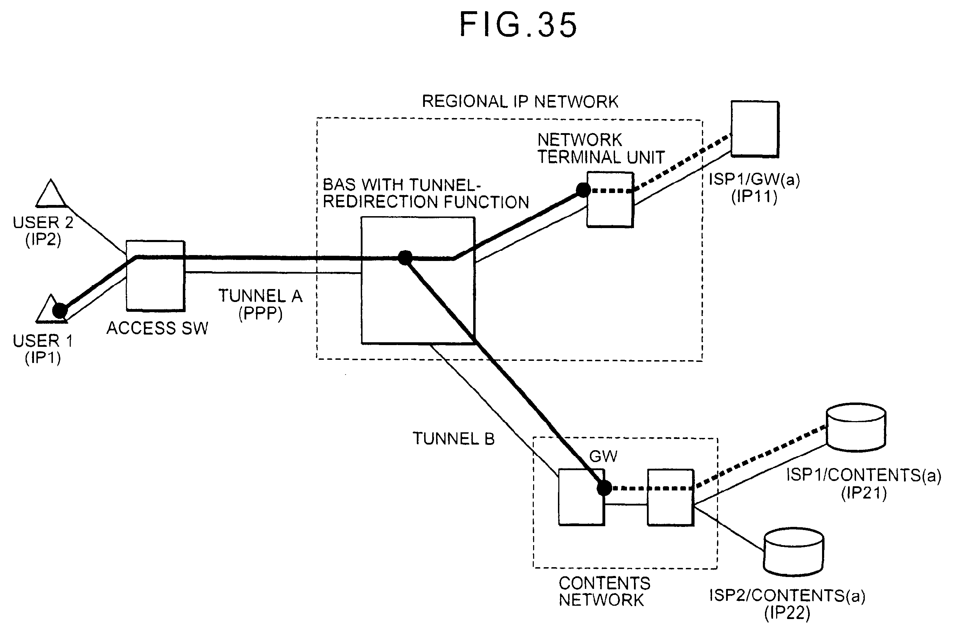

In the fifth embodiment of the invention, the tunnel-redirection device is not installed between the access SW and the BAS as shown in Fig. 1. Instead, "BAS with tunnel-redirection function" with a tunnel-redirection function to BAS is installed between the network terminal unit and the access SW. Fig. 35 is a block diagram to show the fifth embodiment. The tunnel B of the fifth embodiment is built up between the BAS with tunnel-redirection function and the contents network. The other arrangement is the same as that of the first embodiment.

A tunnel by PPP is provided between the user and the network terminal unit. This PPP packet is transferred between the user and BAS by using PPPoE, and between BAS and the network terminal unit by using L2TP (layer 2 tunneling protocol). The tunnel B connected with the contents network explains an example using MPLS similarly to the first embodiment. Tunnel-redirection method is the same as the redirection method of the first embodiment, while partial change is made by providing BAS with redirection function. Description will be given below on this change.

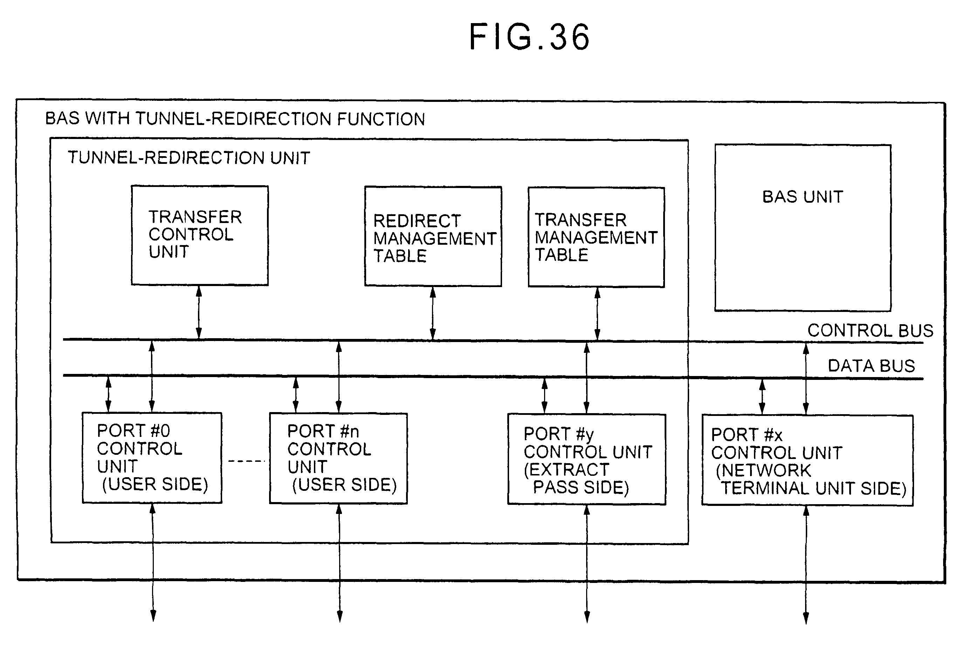

Fig. 36 is a block diagram of BAS with the tunnel-redirection function of the fifth embodiment. In Fig. 36, the block of the tunnel-redirection device of Fig. 3 is inserted as the tunnel-redirection unit. Fig. 36 is different from Fig. 3 in that there is no port control unit (on BAS side). Also, the arrangement of the transfer management table and the contents of the processing of the transfer control unit are different from those of Fig. 3. The BAS unit is a block to achieve the conventional BAS function such as a terminal of PPPoE or a terminal of L2TP. The port control unit on the network terminal unit side is to transmit and receive L2TP packet.

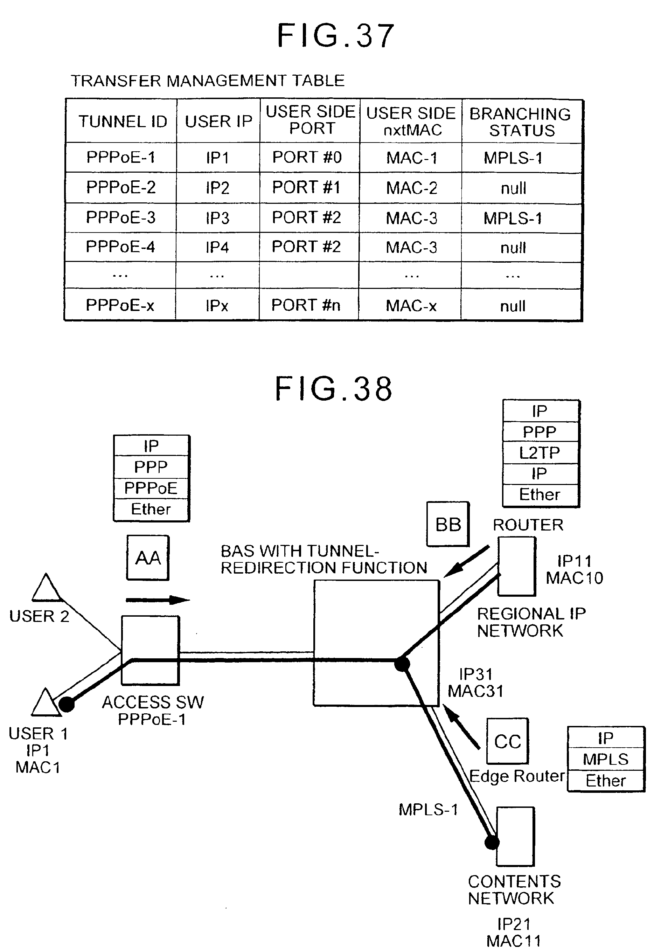

A transfer management table in the fifth embodiment is shown in Fig. 37. For each ID of the tunnel A, the user IP address, the user side port number, the user side destination MAC address, and the branching status (branch pass ID) are stored. It is different from the first embodiment in that there is no such item as BAS side port number or BAS side destination MAC address.

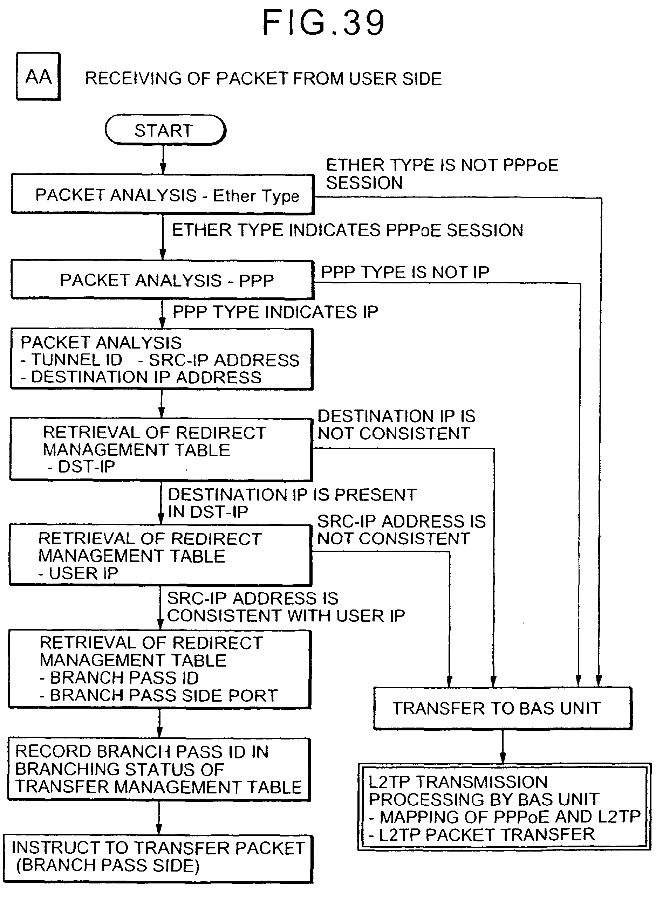

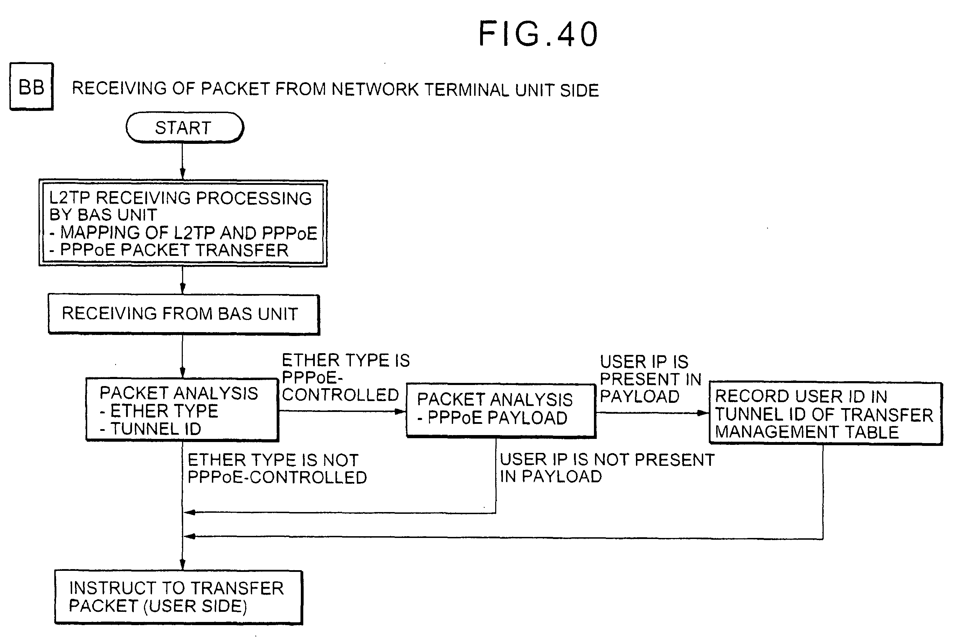

Next, description will be given on packet transfer processing of BAS with tunnel-redirection function in the fifth embodiment by dividing to the following cases referring to Fig. 39 and Fig. 40:
(AA) In case the packet is received from the user;
(BB) In case the packet is received from the network terminal unit;
(CC) In case the packet is received from the branch pass side

### (AA) In case the packet is received from the user

As shown in Fig. 39, the steps to receive the packet from the user to analyze the packet and to retrieve the destination of the transfer destination are the same as shown in Fig. 1 of the first embodiment. In case the transfer destination of the packet is the branch pass, the packet is transferred to the branch pass by the same step as in Fig. 11. In case the transfer destination of the packet is the network terminal unit side port, i.e. when redirection processing is not performed, the processing is different from that of the first embodiment. When no redirection is performed, retrieval is made in the transfer management table and instruction is given to transfer the packet in the first embodiment. In the fifth embodiment, the packet is transferred to the BAS unit.
The BAS unit performs the processing as a conventional BAS (mapping to terminal of PPPoE or to L2TP), and the packet is transferred to the port on the network terminal unit side.

### (BB) In case the packet is received from the network terminal unit

As shown in Fig. 40, when the packet is received from the network terminal unit side, the packet is transferred to the BAS unit. The BAS unit performs the processing as a conventional BAS (mapping to the terminal or L2TP or to PPPoE). When the mapping to PPPoE is completed, the packet is transferred to the tunnel-redirection unit. The steps to receive the packet from BAS unit and to analyze the packet and to transfer it to the user side port are the same as those shown in Fig. 12 of the first embodiment. (CC) In case the packet is received from the branch pass side

The procedure is the same as the procedure (C) of the first embodiment.

As described above, by adding the tunnel-redirection function to BAS, it is possible to perform redirection to the contents server at BAS, and there is no need to install the tunnel-redirection device newly between the BAS and the access SW.

### [6th Embodiment]

In the sixth embodiment, an arrangement using a flat IP network is adopted instead of providing the tunnel B between the BAS with tunnel-redirection function and the contents network in the arrangement shown in Fig. 35. The other features are the same as those of the fifth embodiment. In the sixth embodiment, the redirection method is changed with the basis of change in the method of the second embodiment. The procedure to change is the same as that of the fifth embodiment.

As described above, by adding the tunnel-redirection function to BAS, it is possible to perform redirection to the contents server in BAS, and there is no need to install the tunnel-redirection device between the BAS and the access SW. Because the tunnel B is not provided and access is made to the contents network via IP routing, efficient transfer can be achieved without requiring the header of the tunneling protocol.

### [7th Embodiment]

The seventh embodiment has the same arrangement as shown in Fig. 35, except that the tunnel B between BAS with tunnel-redirection function and the contents network is provided by using VLAN. The other arrangement is the same as that of the fifth embodiment. In the seventh embodiment, the redirection method is changed with the basis of change in the method of the third embodiment. The method of change is the same that of the fifth embodiment.

As described above, by adding the tunnel-redirection function to BAS, it is possible to perform redirection to the contents servers in BAS, and there is no need to install a tunnel-redirection device newly between the BAS and the access SW. Because the tunnel B is built up by using VLAN, an inexpensive VLAN-matched switch can be used for the contents network, and this contributes to the reduction of cost.

### INDUSTRIAL APPLICABILITY

As described above, according to the present invention, a packet switching device changes packets with different protocols. Thus, the packet can be transmitted via a plurality of network tunnels by the user simply through the management of a single network.

## Claims

1. A provider connecting system for connecting a user with a provider by a network tunnel based on a tunneling protocol, said system comprising:
a provider network offered by the provider;
a service network operated on a policy different from that of the provider network; and
a packet switching device, said packet switching device switches a packet on a first network between a user terminal and center servers, a second network tunnel is formed between the system and said contents server, a packet from the user terminal to the contents server on the first network tunnel is extracted and converted to a packet on the second network tunnel and is transferred to the contents server, a packet from the contents server on the second network tunnel to the user terminal is converted to a packet of the first network tunnel and is transferred to the user terminal.

2. The provider connection system according to claim 1, wherein said provider network is an Internet-connected network.

3. The provider connection system according to claim 1, wherein said service network is a contents distribution network.

4. A packet switching device of a provider connection system for connecting a user with a provider via a network tunnel based on a tunneling protocol, said packet switching device comprising:
tunnel transfer means for switching a packet on a first network tunnel provided between a user terminal and a provider network offered by the provider;
tunnel branching means for building up a second network tunnel between the system and a service network operated on a policy different from that of the provider network, a packet from the user terminal to the contents server on the first network tunnel is extracted and converted to a packet on the second network tunnel, and the packet is transferred to the contents server; and
tunnel joining means for converting the packet from the contents server on the second network tunnel to the user terminal to a packet of the first network tunnel and for transferring the packet to the user terminal.

5. The packet switching device according to claim 4, wherein said provider network is an Internet-connected network.

6. The packet switching device according to claim 4, wherein said service network is a contents distribution network.

7. The packet switching device according to claim 4, wherein said tunnel branching means comprises:
packet analyzing means for analyzing a header unit of a receiving packet from the user terminal;
a destination IP address of said receiving packet has redirect judging means for judging whether a destination IP address of said receiving packet is an address to said contents server; and
transmission destination determining means for converting the packet to be transferred to the contents server to a packet format of said second tunnel.

8. The packet switching device according to claim 7, wherein said redirect judging means comprises:
means for maintaining information of a terminal where redirect is allowed; and
authentication judging means for judging that a packet from a terminal where redirect is not allowed is not redirected.

9. The packet switching device according to claim 8, wherein an IP address of said user terminal is used as the information of said terminal where redirect is allowed.

10. The packet switching device according to claim 8, wherein a network address of said user terminal is used as information of said terminal where redirect is allowed.

11. The packet switching device according to claim 7, wherein said packet analyzing means is designed not to redirect the receiving packet without shifting to the redirect judging means in case ether type of an ethernet (R) header unit of the receiving packet from said user terminal is not in PPPoE session stage.

12. The packet switching device according to claim 7, wherein said analyzed packet is designed in such manner as not to redirect the receiving packet without shifting to the redirect judging means when a protocol of PPP header is not IP even when the ether type of the receiving packet from the user terminal is in PPPoE session stage.

13. The packet switching device according to claim 7, wherein said redirect judging means comprises means for maintaining branching status with an identifier of said first tunnel to be used for authentication of joining by said tunnel joining means.

14. The packet switching device according to claim 13, wherein said branching status uses said second tunnel identifier when redirect is performed to said second tunnel, and a value indicating no redirect is used when redirect is not performed.

15. The packet switching device according to claim 14, wherein LSP-ID of MPLS is used as said second tunnel identifier.

16. The packet switching device according to claim 4, wherein said tunnel transfer means comprises packet analyzing means for storing said user IP address as a user identifier when ether type of ethernet (R) header unit of the receiving packet from the center server is in PPPoE discovery stage and the user IP address is stored in PPPoE payload unit.

17. The packet switching device according to claim 4, wherein said tunnel joining means comprises:
packet analyzing means for analyzing a header unit of a receiving packet form the contents server;
joining pass judging means for judging whether the destination IP address of the said receiving packet is an address to said user terminal; and
transmission destination determining means for converting the packet to be transferred to said user terminal to a packet format of said first tunnel.

18. The packet switching device according to claim 4, wherein said tunnel joining means comprises authentication judging means not to join said receiving packet to the first tunnel unless said second tunnel identifier of the receiving packet from said contents server is consistent with said branching status with respect to the destination IP.

19. The packet switching device according to claim 4, wherein said tunnel transfer means is designed in such manner that a terminal authentication information received when said first tunnel is established and said first tunnel identifier are matched each other and are stored.

20. The packet switching device according to claim 19, wherein an IP address at an authenticated terminal is used as said terminal authentication information.

21. A DNS (domain name service) server of a provider connection system, comprising a provider network offered by a provider, a service network operated by a policy different from that of the provider network, and a network tunnel based on a tunneling protocol to connect the user with said provider, wherein said DNS server comprises:
DNS analyzing means for analyzing a domain name inquired by said user and a region, to which said user belongs; and
means for retrieving IP address of said contents server to match the region, to which said user belongs.

22. The provider connection system according to claim 1, wherein said system is designed in such manner that an IP address of said contents server is acquired by a DNS server, said user being a DNS (domain name service) server, comprising:
DNS analyzing means for analyzing a domain name inquired by said user and a region, to which said user belongs; and
means for retrieving IP address of said contents server to match the region, to which said user belongs.

23. A provider connection system for connecting a user with a provider by using a network tunnel based on a tunneling protocol, said provider connection system comprising:
a center server installed on Internet as a center of said provider;
a contents server installed as a local server of said provider for each region; and
a packet switching device, said packet switching device switches a packet on a first network tunnel arranged between a user terminal and said center server, extracts a packet from said user terminal to said contents server on said first network tunnel by arranging an IP network between said contents server and said switching device, performs IP routing to said IP network by converting said packet to a packet of said IP network, converts the packet from said contents server on said IP network to a packet on said first network tunnel, and transfers said packet to said user terminal.

24. The provider connection system according to claim 23, wherein said provider network is an Internet-connected network.

25. The provider connection system according to claim 23, wherein said service network is a contents distribution network.

26. A packet switching device of a provider connection system for connecting a user with a provider by using a network tunnel based on a tunneling protocol, said packet switching device comprises:
tunnel transfer means for switching a packet on a first network tunnel arranged between a user terminal and a center server installed as a center of said provider on Internet;
tunnel branching means for arranging an IP network between the system and a contents server installed as a local server of said provider for each region, for extracting a packet from said user terminal on said first network tunnel to said contents server and for converting said packet to a packet to said IP network, and for performing IP routing to said IP network; and
tunnel joining means for converting a packet from said contents server on said IP network to said user terminal to a packet of said first network tunnel, and for transferring said packet to said user terminal.

27. The packet switching device according to claim 26, wherein said provider network is an Internet-connected network.

28. The packet switching device according to claim 26, wherein said service network is a contents distribution network.

29. The packet switching device according to claim 26, wherein said tunnel branching means comprises:
packet analyzing means for analyzing a header unit of a receiving packet from said user terminal;
redirect judging means for judging whether a destination IP address of said receiving packet is an address to said contents server or not; and
transmission destination determining means for performing IP routing by converting the packet transferred to said contents server to a packet format of said IP network.

30. The packet switching device according to claim 29, wherein said redirect judging means comprises:
means for holding an information of a terminal where redirect is allowed; and
authentication judging means for judging that a packet from a terminal where redirect is not allowed is not redirected.

31. The packet switching device according to claim 30, wherein said packet switching device is arranged in such manner that an IP address of a user terminal is used as an information of said terminal where redirect is allowed.

32. The packet switching device according to claim 30, wherein said packet switching device is arranged in such manner that a network address of a user terminal is used as an information of said terminal where redirect is allowed.

33. The packet switching device according to claim 29, wherein said packet analyzing means is arranged in such manner that said receiving packet is not redirected without shifting to said redirect judging means in case ether type of ethernet (R) header unit of a receiving packet from said user terminal is not in PPPoE session stage.

34. The packet switching device according to claim 29, wherein said packet analyzing means is arranged in such manner that said receiving packet is not redirected without shifting to said redirect judging means in case the protocol of PPP header is not IP even when ether type of the receiving packet from said user terminal is in PPPoE session stage.

35. The packet switching device according to claim 29, wherein said redirect judging means is arranged in such manner that branching status to said first tunnel identifier for joining authentication is maintained by said tunnel joining means.

36. The packet switching device according to claim 35, wherein said branching status is arranged in such manner that an IP address of the contents server being in access is used when redirect is carried out, and a value indicating that there is no redirect is used when redirect is not performed.

37. The packet switching device according to claim 26, wherein said tunnel transfer means comprising packet analyzing means for storing said user IP address as a user identifier in case the user IP address is stored in PPPoE payload unit when ether type of ethernet (R) header unit of the receiving packet from said center server is in PPPoE discovery stage.

38. The packet switching device according to claim 26, wherein said tunnel joining means comprises:
packet analyzing means for analyzing a header unit of a receiving packet from said contents server;
joining pass judging means for judging whether or not a destination IP address of said receiving packet is an address to said user terminal; and
transmission destination determining means for converting a packet transferred to said user terminal to a packet format of said first tunnel.

39. The packet switching device according to claim 26, wherein said tunnel joining means comprises authentication judging means for judging that said receiving packet should not be joined to said first tunnel if said transmission source IP address of the receiving packet from said contents server is not consistent with said branching status with respect to the destination IP.

40. The packet switching device according to claim 26, wherein said tunnel transfer means is arranged in such manner that a terminal authentication information received when said first tunnel is established and said first tunnel identifier are matched each other and are stored.

41. The packet switching device according to claim 40, wherein it is arranged in such manner that an IP address of an authenticated terminal is used as said terminal authentication information.

42. The provider connection system according to claim 23, wherein it is arranged in such manner that said user acquires an IP address of said contents server by the DNS server described in claim 21.

43. A packet switching device according to claim 14, wherein VLAN-ID is used as said second tunnel identifier.

44. A packet switching method of a provider connection system for connecting a user with a provider by using a network tunnel based on a tunneling protocol, said method comprising:
a step of transferring tunnel for switching a packet on a first network tunnel arranged between a user terminal and a provider network offered by the provider;
a step of tunnel branching for arranging a second network tunnel between the system and a service network operated by a policy different from that of the provider network, extracting a packet from said user terminal on said first network tunnel to said contents server, converting said packet to a packet of said second network tunnel, and transferring said packet to said contents server; and
a step of tunnel joining for converting the packet from said contents server on said second network tunnel to said user terminal to a packet of said first network tunnel, and transferring the packet to said user terminal.

45. A computer program using a computer for executing a packet switching method of a provider connection system for connecting a user with a provider by using a network tunnel based on a tunneling protocol, said method comprising:
a step of transferring tunnel for switching a packet on a first network tunnel arranged between a user terminal and a provider network offered by the provider;
a step of tunnel branching for arranging a second network tunnel between the system and a service network operated by a policy different from that of the provider network, extracting a packet from said user terminal on said first network tunnel to said contents server, converting said packet to a packet of said second network tunnel, and transferring said packet to said contents server; and
a step of tunnel joining for converting the packet from said contents server on said second network tunnel to said user terminal to a packet of said first network tunnel, and transferring the packet to said user terminal.

46. The packet switching device according to any one of claims 4 to 20, wherein there is further provided session management means for maintaining a session of said first network tunnel during a period when said second network tunnel is in use.

47. The packet switching device according to claim 46, wherein said provider network is an Internet-connected network.

48. The packet switching device according to claim 46, wherein said service network is a contents distribution network.

49. The packet switching device according to claim 46, wherein said session management means comprises session maintaining means for maintaining session of said first network tunnel by transmitting a session maintaining packet to said center server via said first network tunnel when said second network tunnel is in use.

50. The packet switching device according to claim 49, wherein said session maintaining means is arranged in such manner that session of said first network tunnel is maintained with a preset constant cycle.

51. The packet switching device according to claim 49, wherein said second network tunnel is arranged in such manner that it is in use when one or more packets are transferred within a preset constant cycle.

52. The packet switching device according to claim 49, wherein said second network tunnel is arranged in such manner that it is not in use when said session maintaining packet is transmitted.

53. The provider connection system according to claim 1, wherein said packet switching device is installed between BAS (broadband access server) on said first network tunnel and a user terminal.

54. A packet switching device, comprising a session management means similar to BAS (broadband access server) to the packet switching device as described in claim 4.

55. A provider connection system for connecting a user with a provider as BAS of the provider connection system described in claim 1 by using a network tunnel based on a tunneling protocol, said provider connection system uses a packet switching device, which comprises:
tunnel transfer means for switching a packet on the first network tunnel arranged between a user terminal and a provider network offered by the provider;
tunnel branching means for arranging a second network tunnel between the system and a service network operated by a policy different from that of the provider network, extracting a packet from said user terminal on said first network tunnel to said contents server, converting said packet to a packet of said second network tunnel, and transferring said packet to said contents server; and
tunnel joining means for converting the packet from said contents server on said second network tunnel to said user terminal to a packet of said first network tunnel, and transferring said packet to said user terminal.

56. The provider connection system according to claim 23, wherein said packet switching device is installed between BAS (broadband access server) on said first network tunnel and a user terminal.

57. A packet switching device, comprising a session management means similar to BAS (broadband access server) added to the packet switching device described in claim 26.

58. A provider connection system for connecting a user with a provider as BAS of the provider connection system described in claim 23 by using a network tunnel based on a tunnel protocol, said provider connection system uses a packet switching device, which comprises:
tunnel transfer means for switching a packet on the first network tunnel arranged between a user terminal and a provider network offered by the provider;
tunnel branching means for arranging a second network tunnel between the system and a service network operated by a policy different from that of the provider network, extracting a packet from said user terminal on said first network tunnel to said contents server, converting said packet to a packet of said second network tunnel, and transferring said packet to said contents server; and
tunnel joining means for converting the packet from said contents server on said second network tunnel to said user terminal to a packet of said first network tunnel, and transferring said packet to said user terminal.
